# EUROPEAN PATENT SPECIFICATION

(11) **EP 1 337 937 B1**
(45) Date of publication and mention of the grant of the patent: **17.04.2013**
(21) Application number: 01970715.7
(22) Date of filing: 07.09.2001
(51) Int. Cl.: G06F 17/30

(54) **METHOD AND APPARATUS FOR XML DATA STORAGE, QUERY REWRITES, VISUALIZATION, MAPPING AND REFERENCES**
VERFAHREN UND VORRICHTUNG ZUM ABSPEICHERN VON XML-DATEN, ZUM UMSCHREIBEN VON ABFRAGEN, ZUM DARSTELLEN, ABBILDEN UND REFERENZIEREN
PROCEDE ET SYSTEME POUR STOCKER, REECRIRE DES INTERROGATIONS, VISUALISER, MAPPER ET REFERENCER DES DONNEES XML

(30) Priority: 07.09.2000 US 230878 P; 06.09.2001 US 949020; 06.09.2001 US 948949; 06.09.2001 US 948998
(43) Date of publication of application: 27.08.2003
(73) Proprietor: Oracle International Corporation, Redwood Shores, CA 94065 (US)
(72) Inventor: KRISHNAPRASAD, Muralidhar, Foster City, CA 94404 (US); KRISHNAMURTHY, Viswanathan, Fremont, CA 94555 (US); MURTHY, Ravi, Hayward, CA 94542 (US); NIMANI, Visar, Redwood City, CA 94065 (US)
(74) Representative: Dendorfer, Claus
(86) International application number: PCT/US2001/028180
(87) International publication number: WO 2002/021339

(56) References cited:
- US-A- 5 999 941
- US-A- 6 012 067
- D. FLORESCU ET AL: "A Performance Evaluation of Alternative Mapping Schemes for Storing XML Data in a Relational Database" INRIA ROCQUENCOURT - PROJET RODIN - RAPPORT DE RECHERCHE, [Online] May 1999 (1999-05), pages 1-31, XP002168318 FR Retrieved from the Internet: <URL:http://www-caravel.inria.fr/Fmbrepubs _dana.html> [retrieved on 2001-05-21]
- BANERJEE S. ET AL: "Oracie8i - The XML Enabled Data Management System", PROCEEDINGS 16TH INTERNATIONAL CONFERENCE ON DATA ENGINEERING, 29 February 2000 (2000-02-29), pages 561-568, San Diego, CA, US

## Description

### FIELD OF THE INVENTION

The present invention relates generally to relational databases and, more specifically, to XML visualization of a database, DBURI references to database objects, mapping relational database data and metadata to XML data, providing XML data in response to XML queries, and XML data storage, manipulation and queriability

### BACKGROUND OF THE INVENTION

On the World Wide Web, there is a need to reference data from different sources inside documents. The standard way of referencing such data is through the use of URIs - or universal resource identifiers. Since a vast majority of the data lies inside relational databases, it is necessary to support a standard URI based access methods to such data. Typically, such applications are written using standard mechanisms like Servlets, which in-turn may execute SQL statements to retrieve and format the database data. Significant processing is often needed to convert the results of the SQL data into a standard format required by the user, such as extensible Markup Language (XML). XML is a World Wide Web Consortium (W3C) standard for representing data.

Data within relational databases are typically accessed by sending commands to database servers that manage the databases. Such commands must conform to a database language supported by the database server.

Many applications are now being designed to expect input data in the form of XML documents. When the data provided to the applications comes from a relational database, the data typically has to be reformatted into an XML document.

When data is presented as an XML document, the recipient of the document must understand the structure of the XML document. When the XML document is generated from the result of a relational database query, the structure of resulting XML document will typically vary based on the nature of the query. Consequently, the process of transforming the relational data to an XML document, and generating data that indicates the structure of the XML document thus produced, can be cumbersome and inflexible.

Various techniques may be used to store data from such XML documents into a relational database. According to one technique, each XML document is treated as a single data item, and stored as such in a single column of a relational table. This technique is convenient in that the XML does not have to be processed before it is submitted to the database server. However, because the database server considers the XML document a single data item, the database server is unable to take advantage of the fact that XML documents are structured, where a single XML document may include numerous attributes and elements with specific values.

According to an alternative technique, an XML document may be split up into its constituent attributes and element data before the XML document is stored in a database. The values for each attribute and element are submitted to the database for insertion in corresponding columns of a table. When this technique is used, the database server may be used to select data based on individual attribute values. However, when the data is retrieved from the database, the attribute values are provided as distinct data items, not as part of a single XML document. To recover the XML document, the data received from the database server must be reformatted and structured to reconstruct the XML document.

Based on the foregoing, it is clearly desirable to provide a less cumbersome mechanism and technique for allowing clients, such as browsers, that support accessing resources using URLs, to access relational data.

Further, it is desirable to provide techniques for transforming relational data into XML in an intelligent, flexible and efficient manner.

It is desirable to provide techniques for handling XML documents that do not depend on the specific form in which they are stored. In other words, it is desirable for applications to independently decide on the storage representation of their XML data, and that does not have any impact on the functionality. However, the choice of storage could potentially affect performance of the applications. Further it is also desirable for the database server to implement techniques that exploit the chosen storage representation for optimal processing of user operations.

The academic report "A Performance Evaluation of Alternative Mapping Schemes for Storing XML Data in a Relational Database" by D. Florescu and D. Kossmann, INRIA Rocquencourt, Projet Rodin, May 1999, pages 1 - 31, discloses that XML data can be stored and queried using a standard relational database system. Mapping schemes are used to store the XML data in the database, and XML-QL queries are translated into SQL queries for every mapping scheme.

The article "Oracle8i - The XML Enabled Data Management System" by S. Banerjee et al., Proceedings 16th International Conference on Data Engineering, 2000, pages 561 - 568, discloses how XML data can be stored, managed and queried in the Oracle 8i database.

### SUMMARY OF THE INVENTION

The present invention is defined by the independent claims. The dependent claims concern optional features of some embodiments of the invention.

Techniques are provided for allowing a user to view and retrieve data from a relational database in XML format. Techniques are provided for (1) the user to access this data through the World Wide Web by providing URI references to such data, and (2) to store and perform operations on these URI references inside the database.

Techniques are also provided for using XML syntax in exchanging data with relational databases. Users may navigate through those "visualized" portions of the database using XPath expressions.

Techniques are provided for mapping metadata and data in relational databases to XML data. According to certain embodiments of the invention, a mechanism is provided to allow the user to use a database query to retrieve data from a relational database in the form of XML documents by canonically mapping object relational data to XML data and canonically mapping object relational schemas to XML-Schemas. XML Namespaces are used to augment the schema information, by mapping database metadata objects in different database schemas to different XML namespaces.

Techniques are provided for modeling XML data using an abstract data type in a relational database system.

A mechanism is provided to generate a database query based on an XML query and the mapping information when a user submits the XML query to access the data in the XML document that is stored in the relational database. This process involves rewriting the user queries (and other data manipulation operations) into other queries that better exploit the underlying storage representation of the XML data.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1A is a block diagram that illustrates schemas and schema objects in a relational database;
FIG. 1B is a block diagram that illustrates tables stored in a relational database;
FIG. 2A is a block diagram that illustrates a hierarchy of Uritypes;
FIG. 2B is a block diagram that illustrates a relational database table that stores Uritype data;
FIG. 3A is a block diagram that illustrates a table;
FIG. 3B is a block diagram that illustrates a view that contains a SQL result set;
FIG. 4 is a block diagram that illustrates an XMLType storage architecture;
FIG. 5 is a block diagram that illustrates the structure of an XMLType column; and
FIG. 6 depicts a computer upon which embodiments of the invention may be implemented.

### DETAILED DESCRIPTION OF THE PREFERRED EMBODIMENT

Techniques are provided for using XML syntax for accessing data in relational databases, for mapping data and metadata from relational databases to XML, for modeling XML data using an abstract data type in a relational database system, for multiple storage representations, for uniform query interface, and for optimal processing using query rewrites. In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

### FUNCTIONAL OVERVIEW

Using the techniques described herein, any particular user of the relational database, herein referred to as the "current user", can visualize as an XML tree all the tables and views and the associated schema, in the relational database, to which the current user has been granted access privileges. In other words, the user, instead of seeing the database data in the form of tables and views, the data is presented to the user in the form of an XML document, and the typical structure of an XML document is a tree.

There may be several concurrent current users of the database. However, for the purpose of simplifying the description, the techniques described herein refer to a single current user. The XML tree is hereafter referred to as a "visualized XML document". The visualized XML document comprises XML representations of the tables and views and the associated schema. Because the XML document is based on the access rights of a user, the XML document will vary from user to user based on each user's access rights. Thus, the visualized XML document, as described herein, is associated with the current user.

The data items that are identified by a URL or URI, and that are to be accessed in a relational database, are referred to herein as "target data". Target data may vary from implementation to implementation. Target data may be any one of numerous types of data, such as relational database schema objects, relational data, control files, etc. The present invention is not limited to target data of any particular type.

In order for the current user to access and manipulate target data in the relational databases as if the target data are XML data, a mechanism is provided for: 1) defining a default virtual visualization of any relational database for the current user, including all of the data for which the current user has access privileges in the relational database, wherein the default virtual visualization is defined as a canonical XML document, 2) providing a standard Uniform Resource Indicator (URI) that is locally defined within the database and by which one or more fragments of the visualized XML document can be accessed by defining the URI as an XPath expression over the visualized XML document, 3) providing a standard Uniform Resource Locator (URL) as a mechanism that can be used in conjunction with a web browser that is external to the relational database for accessing data stored in the relational database by defining the URL as an Xpath expression over the visualized XML document, 4) providing, in the relational database, new data types and new object types that can be used for storing the URIs and URLs, and 5) providing a mechanism to modify, create, add or delete data in the relational database through the visualized document, using the standard URIs and URLs as described herein.

XPath expressions are W3c standard ways of navigating XML documents. XPath expressions allow for traversals and insert/deletes/updates on the visualized XML document (the XML visualization of the relational database). The XPath expressions can be converted into SQL Data Definition Language (DDL) and Data Manipulation Language (DML) commands in the relational database.

The combination of (1) XML visualization of the relational database, and (2) the mechanism for navigating through the visualized XML document using XPath expressions, allows the user to "point to" any data in the relational database. For example, an XPath expression such as, /SCOTT/EMP/ROW[EMPNO=2100] points to the data value in the row identified by EMPNO =21. The row in question is in a relational database table called EMP, which is a schema object of the relational database schema called Scott. The XML visualization of the relational database is described in greater detail herein.

The results of a database query is herein referred to as a "SQL result set". When the SQL result set is converted into one or more XML documents, the converted result set is herein referred to as an "XML result set". The data in the relational database is herein referred to as "object relational data" and metadata that is associated with the object relational data is herein referred to as relational database schemas. A relational database schema is a collection of objects, herein referred to as "schema objects". Schema objects are logical structures that directly refer to the data in the relational database. Thus, schema objects include structures such as tables, views, clusters, indexes, etc.

In order that users may submit a query using relational database query language and receive a result set in the form of XML documents, a mechanism is provided for: 1) Mapping of object relational data from the relational database to XML form; 2) Mapping of the relational database schemas to XML form; 3) Generating XML documents from the object relational data and the relational database schemas.

The mechanism for generating XML documents as the result set from object relational data and relational database schemas is based on a set of rules stored in the relational database. Object relational data, either pre-defined or dynamically defined during the processing of the database query, are mapped to corresponding XML data based on the set of rules. Such a mapping is herein referred to as "canonical mapping of object relational data to XML form".

Similarly, relational database schemas are mapped to XML form by mapping the relational database schemas to their corresponding XML-Schemas. Such a mapping is based on a set of rules that are herein referred to as "canonical mapping of relational database schemas to XML-schemas" The canonical mapping of relational database schemas to XML-schemas is described in greater detail herein.

Further, generating an XML result set, i.e., generating XML documents from the SQL result set is based on a set of rules, as described in greater detail herein.

In order to integrate the handling of XML data and SQL data in a relational database, a mechanism is provided to support an XML type datatype in the relational database for storing XML documents within columns and rows of tables. The storage representation may vary from implementation to implementation. The present invention is not limited to any particular storage representation. In certain embodiments of the invention, the user may submit an XML document for storage in the relational database. The data from each field of the XML document is automatically stored in the relational database in a manner that leverages various existing indexing mechanisms associated with storage. For example, when an XML document is submitted for storage in the relational database, a mechanism is provided to determine the corresponding storage column in the relational database for storing each field of the XML document. Thus, each field of the XML document is mapped to some column in the relational database and this mapping information is stored in the relational database. Depending on the type of data, some of the fields of data may be lumped together for storage in a single object relational column while other fields may be stored as separate object relational columns. The data from each field of XML document can be indexed using an appropriate indexing scheme. For example, a B-tree index may be used for columns that contain relational type data and a text index, such as inter Media text, may be used for columns that contain large text data. In certain embodiments, the user may specify the mapping information. By specifying the mapping information, the user may control the granularity of the mapping.

Thus, techniques are provided for 1) the uniform handling of XML data and SQL data, 2) a uniform query interface for a well-defined set of XML operations, where the set of operations are decoupled from the underlying storage mechanism for the XML data in the relational database, 3) query rewrites into a form that leverages the data access and data manipulation capabilities of the underlying storage mechanism in the relational database.

### VIRTUAL XML VISUALIZATION OF A RELATIONAL DATABASE AND XPATH

According to certain embodiments, the current user can see all the data in the relational database, to which the user has been granted access privileges, as a visualized XML document. The visualized XML document includes a "database tag" and a set of schemas with tables and views. For example, if the database is called "oradb" then the XML document starts with the database tag "<oradb>" and ends with the databse tag "</oradb>".

The current user is permitted to read, insert, update and delete elements from the visualized XML document. The current user is thus unaware of the actual nature of the storage or access of the data in the relational database. The current user simply uses XPath expressions for navigation through the visualized XML document.

For example, assume that the current user of the relational database is Scott. Associated with each current user of the relational database is a schema by the same name. A schema is a logical collection of relational database objects such as tables, views clusters, functions, etc.

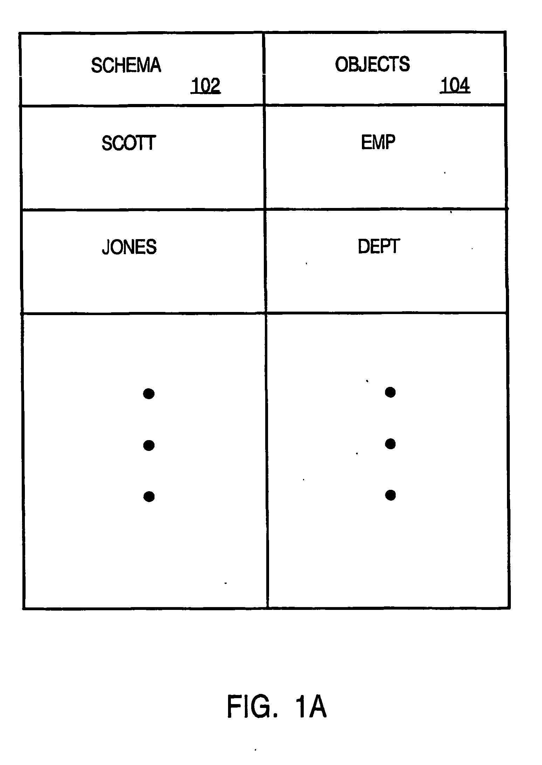

FIG. 1A is a block diagram that illustrates schemas and schema objects in a relational database. Column 102 of FIG. 1A contains a list of schema objects. For the purpose of explanation, only two schemas, SCOTT and JONES, are shown. Column 104 contains the relational database objects in each schema.. For the purpose of explanation, only two tables, EMP and DEPT, are shown. Schema SCOTT contains table EMP and schema JONES contains table DEPT.

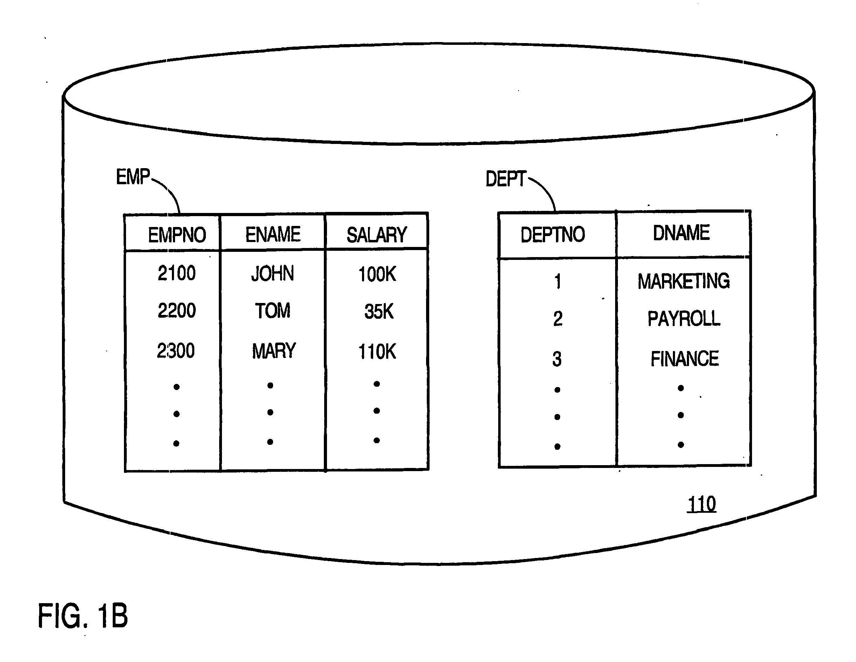

FIG. 1B is a block diagram that illustrates tables stored in a relational database. Relational database 110 contains tables, EMP and DEPT. Table EMP has 3 columns, EMPNO, ENAME and SALARY. Each column of EMP contains rows of values. Table DEPT has 2 columns, DEPTNO and DNAME. Each column of DEPT contains rows of values.

Assume that the current user, Scott, has privileges to access schemas SCOTT and JONES in the relational database and has privileges to access the data associated with SCOTT and JONES. According to certain examples of the techniques, the current user, Scott, is able to see a default virtual visualization of the relational database as follows (not the full visualization):

```
    <oradb>
       <SCOTT>
          <EMP>
             <ROW>
               <EMPNO>21</EMPNO>
               <ENAME>John</ENAME>
               <SALARY>100,000</SALARY>
             </ROW>
              <ROW>
                 ....<!— other emp values -->
               </ROW>
            </EMP>
             .... <!-- other tables.. -->
        </SCOTT>
        <JONES>
            <DEPT>
             <ROW>
               <DEPTNO>1</DEPTNO>
               <DNAME>Marketing</DNAME>
             </ROW>
              <ROW>
                  .... <!-- other dept values -->
               </ROW>
            </DEPT>
       </JONES>
      </oradb>
```

The above default virtual visualization is merely an example of one implementation of a default virtual visualization. The default virtual visualization may vary from implementation to implementation. The invention is not restricted to a particular visualization model.

According to certain embodiments of the techniques, a standard URL and URI mechanism is also provided to access the data stored in any database, by defining the URL and URI as an XPath expression over the visualized XML document.

According to one example of the invention, the URL may be processed by using a servlet, which uses the native URI processing mechanisms to access the data pointed by the URL.

According to certain examples of the invention, the database tag (oradb) may be implicitly bound in the processing context and need not be explicitly specified in the URL.

A current user who does not have local access to the relational database may use a browser to access data in the relational database over the Internet by using a URL. For example, assume that the current user is Scott and that Scott would like to use a browser to access the employee-name column of EMP table at the row for which the employee number is 2100, and where the EMP table is in schema SCOTT. The URL that Scott would use may look like the following:
http://machine-name/servlet-name/SCOTT/EMP/ROW[EMPNO=2100]/ENAME

In the above URL, the database tag, "oradb", is implicitly bound, and thus the user need not specify the database tag in the URL.

The result of accessing the URL or the URI would be a fragment of the visualized XML document containing the ename argument as shown below:

```
      <? xml version="1.0"?>
      <ENAMEL John<ENAME>
```

The current user can augment the URL or URI with content types to specify the Multipurpose Internet Mail Extensions (MIME) type of the output. For example, if the URL points to a BLOB (Binary Large OBject) column that is storing an image, wherein the image is the "target data", then the content type can be set to gif. Thus, in response to using the URL, the current user obtains the image rather than, for example, a large hexadecimal file.

As another example, the current user may augment the URL to request, as the target data, the text value of the column to which the URL points. For example, assume that the current user, Scott, uses the following URL to access the employee-name column of EMP table at the row for which the employee number is 2100:

```
        http://machine-name/<servlet-name>/
/SCOTT/EMP/ROW[EMPNO=2100]/ENAME/text()
```

"text()" is an XPath standard to identify the text node. The use of text() in the above URL would produce a result that contains only the text value in the employee-name column of EMP table at the row for which the employee number is 2100. The text value in the employee-name column of EMP table at the row for which the employee number is 2100 is "John". Thus, the result of accessing the above URL using text() is "John". In contrast, when text() is not used in the URL to access the employee-name column in the example, "John" is inlined inside a fragment of the visualized XML document as follows:

```
    <ENAME> John</ENAME>
```

In another example of the invention, the mime information may be derived automatically by the database, based on other auxiliary information that may be stored with the URL or through user written functions.

### MAPPING RULES FOR DEFINING VIRTUAL XML VISUALIZATION OF A RELATIONAL DATABASE

Techniques are provided for defining the default virtual visualization of the database as a canonical XML document. According to one example, the rules for defining the default virtual visualization are as follows:
1) There is a pseudo top-level enclosing tag that identifies the relational database that contains the target data. An example of a pair of enclosing tags that identify the relational database that contains the target data is <oradb> ...</oradb>, where "oradb" is the name of the relational database that contains the target data, as shown below (not all the elements in the visualization are shown):

```
     <oradb>
        <SCOTT>
            <EMP>
               <ROW>
                 <EMPNO>21</EMPNO>
                 <ENAME>John</ENAME>
                 <SALARY>100,000</SALARY>
               </ROW>
             </EMP>
              .... <!-- other tables.. -->
         <SCOTT>
         <JONES>
            <DEPT>
               <ROW>
                  .... <!-- other dept values -->
               </ROW>
            </DEPT>
       </JONES>
       </oradb>
```

2) Each schema in the relational database for which the current user has been granted access privileges corresponds to one element in the visualized XML document. The name of the element is the same as the name of the schema to which the element corresponds. In the example illustrated herein, the schema SCOTT in the relational database "oradb" is represented by the element with the same name in the visualized XML document. Similarly, the schema JONES is represented by the element with the same name in the visualized XML document. The following visualized XML document is a visualization of the relational database down to the schema element level. For the purpose of illustration, only the elements corresponding to schemas SCOTT and JONES are shown.

```
     <oradb>
       <SCOTT>
        SCOTT>
        <JONES>
      </JONES>
      </oradb>
```

3) Each table or view in the relational database for which the current user has been granted access privileges corresponds to one element in the visualized XML document. The name of the element is the same as the name of the table or view to which the element corresponds. In the example illustrated herein, the table EMP in the relational database "oradb" is represented by the element with the same name in the visualized XML document. Similarly, the table DEPT is represented by the element with the same name in the visualized XML document. The following visualized XML document is a visualization of the relational database down to the table element level. For the purpose of illustration, only the elements corresponding to tables EMP and DEPT are shown.

```
     <oradb>
       <SCOTT>
            <EMP>
            </EMP>
         </SCOTT>
         <JONES>
            <DEPT>
            </DEPT>
       </JONES>
      </oradb>
```

4) Each row of each table or view in the relational database for which the current user has been granted access privileges corresponds to one element in the visualized XML document. The following visualized XML document is a visualization of the relational database down to the row element level. For the purpose of illustration, only the elements corresponding to rows of tables EMP and DEPT are shown.

```
    <oradb>
       <SCOTT>
           <EMP>
              <ROW>
              </ROW>
                ... <!-multiple ROW tag pairs - each pair corresponding to a single
                row>
             </EMP>
        </SCOTT>
        <JONES>
           <DEPT>
              <ROW>
              </ROW>
               ... <! multiple ROW tag pairs - each pair corresponding to a single
               row>
           </DEPT>
      </JONES>
      </oradb>
```

5) Each column of each table or view in the relational database for which the current user has been granted access privileges corresponds to one element in the visualized XML document. The name of the element is the same as the name of the column to which the element corresponds. In the example illustrated herein, the column EMPNO in table EMP is represented by the element with the same name in the visualized XML document. Similarly, the column ENAME is represented by the element with the same name in the visualized XML document. The following visualized XML document is a visualization of the relational database down to the column element level. For the purpose of illustration, only the elements corresponding to columns EMPNO and ENAME in table EMP are shown.

```
     <oradb>
       <SCOTT>
            <EMP>
               <ROW>
                 <EMPNO>2100</EMPNO>
                 <ENAME>JOHN</ENAME>
                <SALARY>100000</SALARY>
               </ROW>
               <ROW>
                 <EMPNO>2200</EMPNO>
                 <ENAME>TOM</ENAME>
                <SALARY>35000</SALARY>
               </ROW>
                 .... <!-other rows..>
             </EMP>
        </SCOTT>
         <JONES>
            <DEPT>
              <ROW>
                  <DEPTNO>1</DEPTNO>
                  <DNAME>MARKETING</DNAME>
               </ROW>
                   ... <!-other rows..>
            </DEPT>
       </JONES>
      </oradb>
```

### RULES FOR CONVERTING XPATH EXPRESSIONS INTO RELATIONAL DATABASE QUERIES

According to one embodiment of the invention, the Xpath query over the XML visualization may be translated into relational database queries and the result formatted in XML. Techniques are provided for converting XPath expressions into relational database queries. For the purpose of explanation, assume that the XPath expression that is to be converted into a query is in the context of the relational database "oradb". Thus, the format of a typical XPath expression is the context of "oradb" can be generalized as follows:
/Schema/Table/Row/Column/Attribute ...(! further attributes)

Each element of the above XPath expression may optionally have a predicate. Predicates take the form,
[(element) (operator) (value)]
For example, the element, Row, may have a predicate as follows, /Schema/Table/Row [Column1 = 2100]/Column2

The rules for converting XPath expressions into relational database queries will refer to the above general format for an XPath expression and are as follows:
1) An XPath expression of the form /Schema/Table is converted to a corresponding relational database query such as the following SQL statement,
   Select *
   From Schema.Table
   The syntax used in the preceding statement is merely illustrative. The actual syntax of SQL statements may vary from implementation to implementation. The present invention is not limited to any particular syntax.
   The results of the SQL statement can then be converted into a corresponding fragment of the visualized XML document.
2) An XPath expression of the form /Schema/Table/Row/Column is converted to a corresponding relational database query such as the following SQL statement,
   Select Column
   From Schema.Table
   The syntax used in the preceding statement is merely illustrative. The actual syntax of SQL statements may vary from implementation to implementation. The present invention is not limited to any particular syntax.
   The results of the SQL statement can then be converted into a corresponding fragment of the visualized XML document.
3) An XPath expression of the form /Schema/Table/Row [Empno = 2100]/Column is converted to a corresponding relational database query such as the following SQL statement,
   Select Column2
   From Schema.Table
   Where Column1 = 2100
   The syntax used in the preceding statements is merely illustrative. The actual syntax of the query language statements may vary from implementation to implementation. The present invention is not limited to any particular syntax.
   The results of the query language statement can then be converted into a corresponding fragment of the visualized XML document.

### URI TYPES

According to certain embodiments, a special data type is provided in the relational database for storing URIs and URL in the relational database. Such a data type is herein referred to as an "Uritype". URIs and URLs can be stored in columns in relational database tables by defining the URIs and URLs as Uritype data.

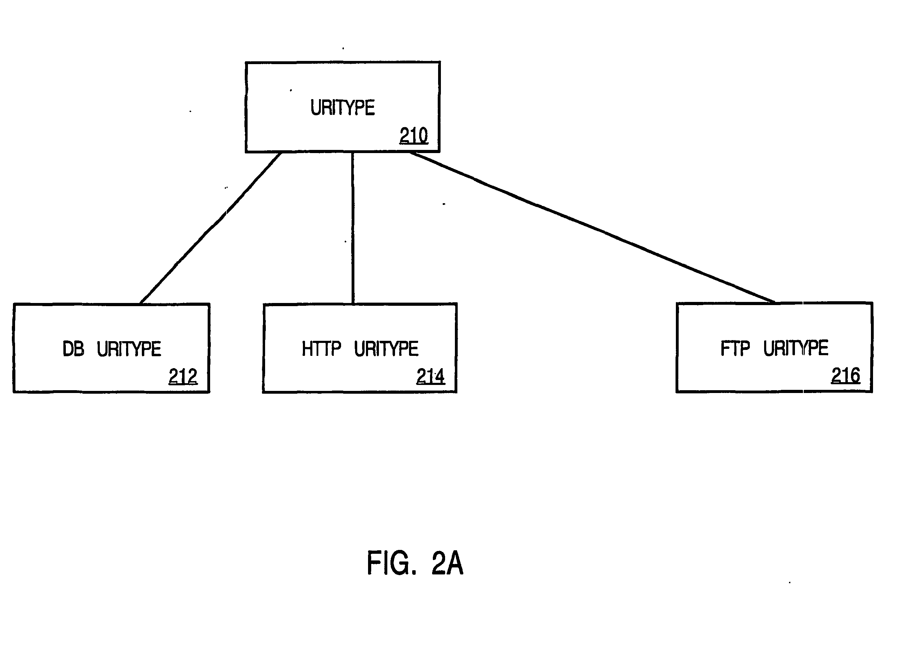

FIG. 2A is a block diagram that illustrates a hierarchy of Uritypes. FIG. 2A shows a general Uritype 210 that comprises subtypes. According to certain examples the subtypes are DB-Uritype 212, HTTP-Uritype 214, and FTP-Uritype 216.

The HTTP-Uritype stores HTTP (HyperText Transfer Protocol) URLs, and fetches the data pointed to by the URL using the HTTP protocol. The FTP-Uritype stores FTP (File Transfer Protocols) URLs and fetches the data, using FTP. The DB-Uritype stores intra-database references using the Xpath mechanism described herein.

The DB-Uritype can fetch the data associated with the URL using the Xpath translation mechanism defined earlier or through other mechanisms.

The user may define subtypes of the Uritype or any of the other subtypes, and provide the implementation for getting the data pointed to by that URL.

Apart from being able to store URIs and URLs, the general functions associated with the Uritype data type include retrieving URIs and URLs as well as retrieving XML documents that are stored as LOBs, for example, CLOBs and BLOBs, in the relational database.

When the current user wishes to retrieve target data, pointed to by the URL, from the relational database, the current user's XPath expressions are automatically converted into appropriate query language statements. The actual syntax of such statements depend on the query language used in the relational database and may vary from implementation to implementation. The present invention is not limited to any particular syntax. The relational database functions of the Uritype data type can be abstracted by the following statements:
getURL( );
getBLOB( );
getCLOB( ).
gctXML( );

The preceding statements merely illustrate function. Such statements are not necessarily query language statements. The invention is not restricted to a particular set of query language statements.

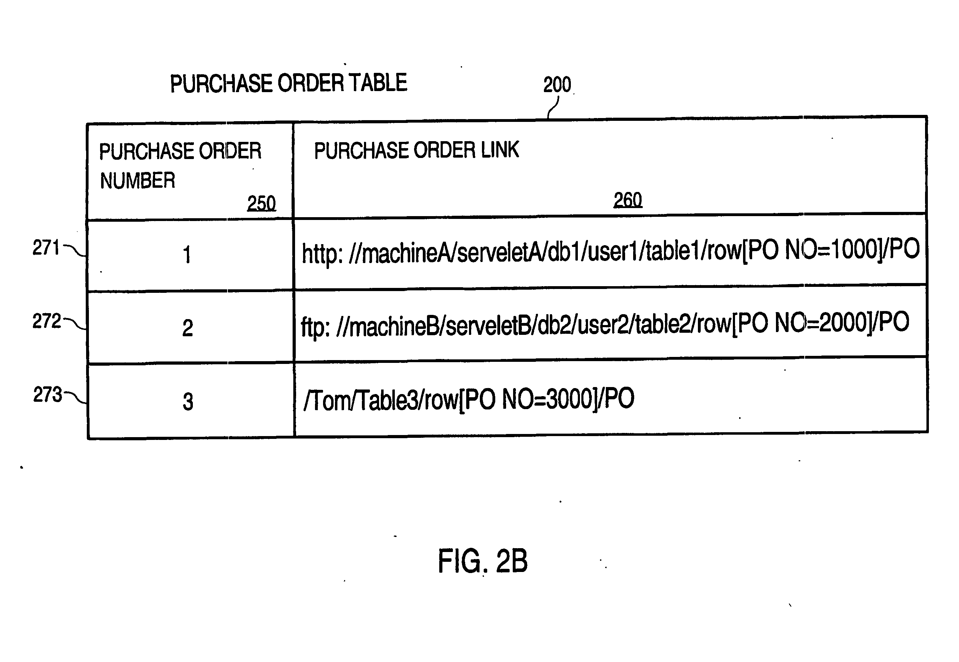

FIG. 2B is a block diagram that illustrates a relational database table that stores Uritype data. Relational database table 200 is a Purchase Order table. Table 200 has 2 columns: Purchase Order Number column 250 and Purchase Order Link column 260. Both columns 250 and 260 contain 3 rows of data, namely, row 271, row 272 and row 273. The Purchase Order Link column can store data of type UriType.

Column 260 at row 271 stores data of type HTTP-Uritype. Column 260 at row 272 stores data of type FTP-Uritype. Finally, column 260 at row 273 stores data of type DB-Uritype. Note that since the DB-Uritype, HTTP-Uritype etc., have been defined as subtypes of the UriType type, we can store instances of these types in the Purchase Order Link column.

The current user can retrieve any of the data pointed by the Uritype data stored in table 200 The database will automatically fetch the data using the appropriate mechanisms.

For example, the query shown below, retrieves the Purchase Order data pointed to by the Purchase Order Link column:
Select p.PurchaseOrderLink.getXML()
From PurchaseOrderTable p;

The database will fetch the purchase order through HTTP for the first row, use FTP for the second row and use the DB-Uritype processing mechanism for the last row.

The syntax used in the preceding statements is merely illustrative. The actual syntax may vary from implementation to implementation. The present invention is not limited to any particular syntax. The conversion into the appropriate query is transparent to the current user. Thus, it is not necessary for the current user to be aware of the type of the target data.

### MODIFYING RELATIONAL DATA USING URITYPE FUNCTIONS

According to certain embodiments, a mechanism is provided to modify, add or delete XML data that is stored in the relational database using the standard URIs and URLs as described herein.

For example, assume that the current user, Scott, is able to see a default virtual visualization of the relational database as follows (not the full visualization):

```
     <oradb>
       <SCOTT>
          <EMP>
             <ROW>
               <EMPNO>21</EMPNO>
               <ENAME>John</ENAME>
               <SALARY>100,000</SALARY>
             </ROW>
              <ROW>
                 .... <!-- other emp values -->
               </ROW>
            </EMP>
             .... <!-- other tables.. -->
        </SCOTT>
        <JONES>
            <DEPT>
             <ROW>
                <DEPTNO>1</DEPTNO>
                <DNAME>Marketing</DNAMF?
             </ROW>
              <ROW>
                  .... <!- other dept values -->
               </ROW>
            <DEPOT>
       </JONES>
      </oradb>
```

Further assume that the current user, Scott, would like to update data at the employee-name column of EMP table at the row for which the employee number is 2100. The update comprises changing the name "John" to "Mary".

According to certain embodiments, if the current user, Scott, has direct access to the relational database, then Scott can perform the following: 1) selects the update operation for updating XML data and 2) uses the following XPath expressions:

```
      /SCOTT/EMP/ROW[EMPNO=2100]/ENAME
     <ENAME>Mary</ENAME>
```

The XPath expression /SCOTT/EMP/ROW[EMPNO=2100]/ENAME indicates the row and column of the target data that is to be updated.

The XPath expression <ENAME>Mary</ENAME> indicates the new value of the target data to be updated.

The above XPath expressions are converted into query language statements such as:
UPDATE "SCOTT"."EMP"
SET "ENAME" = 'Mary'
Where "EMPNO" = 2100;

If the current user, Scott, is using a web browser to access target data in the relational database, then according to certain examples a general purpose servlet may be provided to allow the current user to modify, add or delete XML data that is stored in the relational database using the standard URIs and URLs. Using the above example of updating the name "John" to "Mary", a general purpose servlet is provided that allows Scott to perform the following: 1) select the update operation for updating XML data and 2) post to the servlet the "update" information in the form of the following XPath expressions:

```
      /SCOTT/EMP/ROW[EMPNO=2100]/ENAME
     <ENAME>Mary</ENAME>
```

According to certain other examples a special servlet may be provided for each database operation. In other words, there may be an "Insert-servlet'' for the INSERT operation, a "Delete-servlet" for the DELETE operation, and an "Update-servlet" for the UPDATE operation.

Using the above example of updating the name "John" to "Mary", an "Insert_servlet" is provided that allows Scott to perform the following: 1) select the update operation for updating XML data and 2) post to the servlet the "update" information in the form of the following XPath expressions:
http://machine-name/<update-servlet>/SCOTT/EMP/ROW[EMPNO=2100]/ENAME
<ENAME>Mary</ENAME>

The same mechanism is used to modify, add or delete metadata. For example, if the current user, Scott would like to delete the schema SCOTT, then Scott can perform the following: 1) selects the delete operation for deleting XML data in the relational database and 2) uses the following XPath expression that indicates which level in the visualized XML document to delete:
http://machine-name/<delete-servlet>/ SCOTT
XML RESULT SET FROM SQL RESULT SET

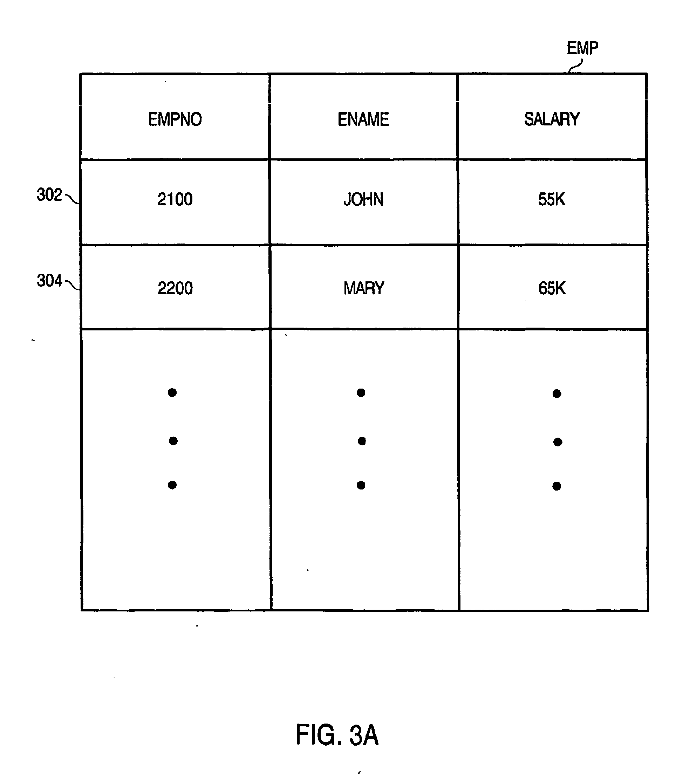

FIG. 3A is a block diagram that illustrates a table that is stored in a relational database. Table EMP has 3 columns, EMPNO, ENAME and SALARY. Each column of EMP contains a value for each of a plurality of rows of table EMP. However, for simplicity, FIG. 3A shows only 2 rows, namely, row 302 and row 304. In column EMPNO, row 302 contains the value "2100" and row 304 contains the value "2200". Similarly, in column ENAME, row 302 contains the value "JOHN" and row 304 contains the value "MARY". In column SALARY, row 302 contains the value "55K" and row 304 contains the value "65K".

As an example, assume that a user submits a relational database query to retrieve values from two of the columns, namely, EMPNO and ENAME from table EMP. An example of the relational database query is the following SQL statement,

### SELECT empno, ename FROM emp

The syntax used in the preceding statement is merely illustrative. The actual syntax of SQL statements may vary from implementation to implementation. The present invention is not limited to any particular syntax.

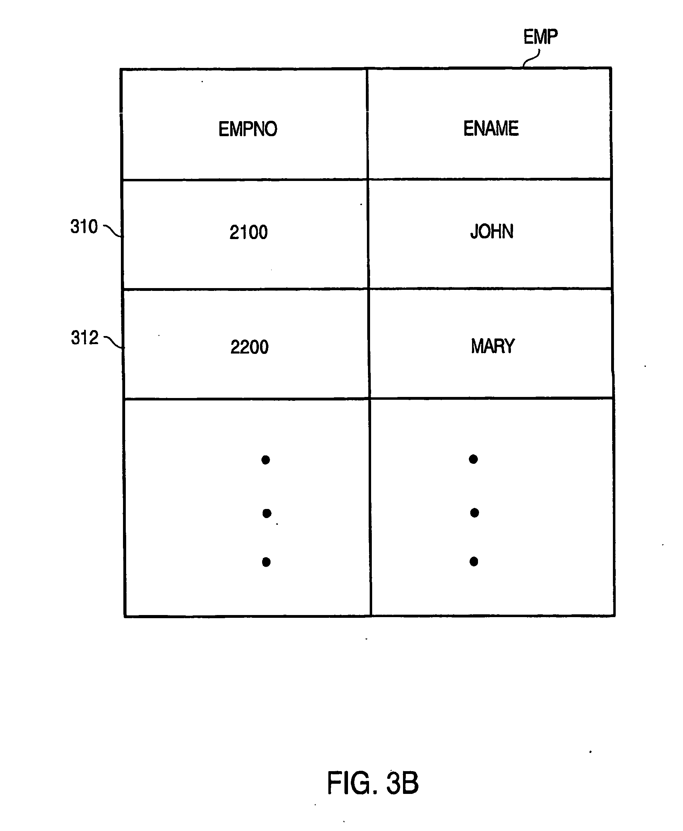

FIG. 3B is a block diagram that illustrates a view that contains the SQL result set of the SQL statement, SELECT empno, ename FROM emp. The SQL result set comprises only two of columns of table EMP. Thus, FIG. 3B shows only columns EMPNO and ENAME. Even though the SQL result set comprises all the rows of value in columns EMPNO and ENAME, for simplicity, only rows 310 and 312 (which respectively contain values from rows 302 and 304) are shown in FIG. 3B.

The SQL result set of FIG. 3B can be converted into a corresponding XML result set based on the following rules,
1) The XML result set is in the form of an XML document that begins with a ROWSET tag. The ROWSET tag indicates that the XML document comprises a set of row elements.
2) Each row of the SQL result set is converted to a corresponding ROW element in the XML document where the ROW element is indicated by a pair of ROW tags.
3) Each column within a given row of the SQL result set is converted to a corresponding COLUMN element that is embedded in the encompassing ROW element that in turn corresponds to the given row of the SQL result set. The name of the COLUMN tag is the name of the corresponding column in the SQL result set.

The ROWSET, and ROW tags may have varying monikers in various implementations of the invention. The present invention is not limited to any particular moniker for such tags. As for COLUMN tags, according to one implementation, an aliasing mechanism is provided for changing names of the COLUMN tags.

To illustrate, the XML result set of the above example may appear like the following:

```
         <ROWSET>
            <ROW>
               <EMPNO>2100</EMPNO>
               <ENAME>John</ENAME>
            </ROW>
               <EMPNO>220O<WMPNO>
               <ENAME>Mary</ENAME>
             <ROW>
                 .... <!- other column elements -->
             </ROW>
              ... <!-- other row elements -->
         </ROWSET>
```

### MAPPING OF OBJECT RELATIONAL DATA

An example of the canonical mapping of object relational data to XML form is as follows:
a) The mapping of object relational columns to XML elements:
For example, referring to FIG. 3A, the XML result set of a SQL query to select EMPNO and ENAME at the single row 302 would appear like the following:

```
         <ROWSET>
             <ROW>
               <EMPNO>2100</EMPNO>
               <ENAME>John</ENAME>
             </ROW>
         </ROWSET>
```

The object relational columns EMPNO and ENAME are mapped to corresponding COLUMN elements in the XML result set. EMPNO and ENAME are embedded in the encompassing ROW element. b) The mapping of object relational object types to XML elements with nested sub-elements containing the attributes of the object type:

For the purpose of explanation, assume that a user-defined type called "Address_t" is previously created in the relational database. "Address_t" is a complex object type that comprises 3 scalar attributes, namely CITY, STATE and ZIP. Assume that there is a table in the relational database called Employee_table. Employee_table has 2 columns ENAME and ADDRESS. ENAME is of type "string" and ADDRESS is the user-defined type "Address_t". Further assume that columns ENAME and ADDRESS each contain only a single row of value, namely, employee name "John" and John's address, respectively.

A SQL query such as "SELECT * FROM Employee_table" can produce a SQL result set that maps to the following XML result set,

```
         <ROWSET>
             <ROW>
               <ENAME>John</ENAME>
                <ADDRESS>
                   <CTTY>Redwood City</CITY>
                   <STATE>California</STATE>
                   <ZIP>94065</ZIP>
                </ADDRESS>
             </ROW>
         </ROWSET>
```

The object relational column ADDRESS maps to an element with the same tag name in the XML result set. The element ADDRESS, which is of type "address_t", has attributes CITY, STATE and ZIP that are mapped to sub-elements of the element ADDRESS. Each sub-element has the name of the attribute as its corresponding tag name in the XML result set.
c) The mapping of object relational collection types to XML lists:

For the purpose of explanation, assume that a user-defined type called "Lineitems_t" is previously created in the relational database. "Lineitems_t" is a collection object type that comprises a plurality of collection items. Each collection item has an ID attribute that defines the positional value of the item within the collection. For example, assume that there is a table in the relational database called PurchaseOrder_table. PurchaseOrder_table has 2 columns PONO for purchase order number and LINEITEMS for a list of line-items. PONO is of type "number" and LINEITEMS is of type "Lineitems_t". Further assume that columns PONO and LINEITEMS each contain a single row of value, namely, purchase order number "101" and the collection of lineitems that is associated with purchase order number "101 ". Assume that there is 1 item, namely, "books", in the collection of lineitems.

A SQL query such as "SELECT * FROM PurchaseOrder_table" produces a SQL result set that maps to the following XML result set:

```
         <ROWSET>
             <ROW>
               <PONO>101</PONO>
                <LINEITEMS>
                  <LINEITEMS_T id = "1">
                     <LINEITEMNAME>BOOKS</ LINEITEMNAME>
                     <COST>$150</COST>
                  </LINEITEMS_T>
                </LINEITEMS>
             </ROW>
         </ROWSET>
```

The object relational column LINEITEMS maps to an element with the same tag name in the XML result set. Each collection item in LINEITEMS is mapped to a sub-element that is embedded within the LINEITEMS element. Each collection item has the collection type name as the tag name, namely, "LINEITEM_T". Each collection item has attributes LINEITEMNAME, and COST that are mapped to sub-elements that are embedded within the element LINEITEM_T. Each sub-element has the name of the attribute as its corresponding tag name, e.g., <LINEITEMNAME>, and <COST>.
d) The mapping of object relational REF types to URI references:

Object relational REF columns are columns for storing object references to row objects contained in any object relational table. For the purpose of explanation, assume that the relational database has a table called Employee_table. Employee_table has columns EMPTNO, ENAME and DEPTREF. EMPNO is of type "number" and assume that EMPNO has only one row of value "15". ENAME is of type "string" and assume that ENAME has only one row of value "John". DEPTREF is of type "REF" and assume that DEPTREF has only one row of value, which is a reference to a row of value corresponding to DEPTNO =1001 in another table called Department_table. Assume that Department_table is in the schema SCOTT and has columns DEPTNO with value "1001" and DEPTNAME with value "SPORTS".

A SQL query such as "SELECT EMPNO, DEPTREF FROM Employee-table produces a SQL result set that maps to the following XML result set:

```
         <ROWSET>
             <ROW>
               <EMPNO>15</EMPNO>
               <DEPTREF>0344855FF4ABBCC3333</DEPTREF>
             </ROW>
         </ROWSET>
```

According to certain examples of the invention, the REF value in the DEPTREF column is converted to XML form for the XML result set by converting the object relational REF value into a binary value that is encoded in hexadecimal ("HEX"). Thus, in the above XML result set "0344855FF4ABBCC3333" is the encoded HEX. According to certain other examples of the invention, the REF value in the DEPTREF column is converted to XML form by converting the REF value into a Database Uniform Resource Indicator ("DBURI") reference.

Using the same example above, the DBURI reference may appear as, SCOTT/DEPARTMENT_TABLE/ROW[DEPTNO= "1001"], where Deptno is the primary key information. Thus, the XML result set may appear as:

```
      <ROWSET>
        <ROW>
         <EMPNO>15</EMPNO>
         <DEPTREF>/SCOTT/DEPARTMENT_TABLE/ROW[DEPTNO="1001"]</DEPTREF>
        </ROW>
      </ROWSET>
```

According to yet other examples of the invention, an object identifier that uniquely identifies the object stored in the REF column can be used in creating the DBURI reference. Using the same example above, the DBURI reference may appear as, SCOTT/DEPARTMENT_TABLE/ROW[SYS_NC_OID$="0asfgd23gfin3423n"]

Thus, the XML result set may appear as:

```
     <ROWSET>
     <ROW>
      <EMPNO>15</EMPNO>
      <DEPTREF>/Scott/Department_Table/Row[SYS_NC_OID$="0asfgd23gfm3423n"]</DEPTREF
      >
     </ROW>
     </ROWSET>
```

According to an example of the invention, LOB values may be converted to DBUri references as well. For example, if there is a column in the department table called DEPT_PHOTO, which is a BLOB column, then a DBUri reference can be used to reference the BLOB data instead of in-lining the BLOB data in the XML document.

The XML result may appear as follows for the DEPT_PHOTO column:

```
     <ROWSET>
       <ROW>
          <DEPTNO>1001</DEPTNO>
          <DEPT_PHOTO>/SCOTT/DEPARTMENT_TABLE/ROW[DEPTNO=1001]/
     DEPT_PHOTO/text()</DEPT_PHOTO>
       </ROW>
     </ROWSET>
```

The invention is not limited to generating DBUri references to LOBs and REFs. A DBUri reference can be generated to reference any piece of database data that need not be inlined in the visualized document. For example, nested tables, LONGs and other datatypes may be converted to DBUri references instead of inlining the whole data inside the visualized document. The DBUri reference can be generated by using the primary key information or ROWID of the row in the predicates of the Xpath expression.

### MAPPING OF RELATIONAL DATABASE SCHEMAS

Relational database schemas are mapped to XML form by mapping the relational database schemas to their corresponding XML-Schemas. For example, referring to FIG. 3A, in order to produce the XML result set of a SQL query to select EMPNO and ENAME at the single row 302, an XML-Schema is generated. The XML-Schema defines the structure of the XML result set, which is in the form of an XML document. Thus, the XML-Schema that corresponds to the XML result set of a SQL query to select EMPNO and ENAME at the single row 302 is as follows, :

```
    <xsdachema xmhis:xsd="http://www.w3.org/2000/10/XMLSchema">
    <xsd:element name="ROWSET">
 <xsd:complexType>
    <xsd:element name="ROW" minOccurs="0" maxOccurs="unbounded">
      <xsd:complexType>
          <xsd:element name="EMPNO" type="xsd:integer" minoccurs="0"/>
          <xsd:element name="ENAME" type="xsdatring" nullable="true"
          min0ccurs="0"/>
      </xsd:complexType>
     </xsd:element>
 </xsd:complexType>
 </xsd:element>
 </xsd:schema>
```

As can be seen from the above example, in addition to defining the structure of the XML result set (XML document), XML-Schemas also define the type of the data and constraints, if any, on the data. For example, the above sample XML-Schema indicates, among other things: 1) the URL, i.e., http://www.w3.org/2000/10/XMLSchema, for the namespace that defines the standards that apply to all XML-Schemas, 2) element ROWSET is of type "complex" and contains ROW elements, 3) the ROW elements are of type "complex" and can occur any number of times in the XML document, 3) the element EMPNO, which is embedded in the ROW element, is of type "integer", and 4) the element ENAME, which is embedded in the ROW element, is of type "string". The nullable attribute indicates whether the element value can be NULL or not. "MinOccurs" indicates the minimum number of occurrences of this element in the resultant document.

Alternatively, XML-Schemas can be "inlined" in its corresponding XML result set (XML document). For example, referring to FIG. 3A, the XML result set of a SQL query to select EMPNO and ENAME at the single row 302, can have inlined in the XML result set its corresponding XML-Schema as follows, :

```
    <?xml version = '1.0'?>
    <DOCUMENT xmlns:xsd="http://www.w3.org/2000/10/XMLSchema">
    <xsd:schema xmlns:xsd="http://www.w3.org/2000/10/XMLSchema">
 <xsd:element name="ROWSET">
   <xsd:complexType>
      <xsd:element name="ROW" minOccurs="0" maxOccurs="unbounded">
        <xsd:complexType>
            <xsd:element name="EMPNO" type="xsd:integer" minoccurs-="0"/>
            <xsd:element name="ENAME" type="xsdatring" nullable="true"
            mboccws="0"/>
        </xsd:complexType>
      </xsd:element>
   </xsd:complexType>
 </xsd:element>
 </xsd:schema>
 <ROWSET xmIns:xsi="http://www.w3.org/2000/10/XMLSchema-instance"
 xsi:noNamespaceSchemaLocation:="#/DOCUMENT/xsd:schema[not(@targetNamespace
 )]"
         <ROW num=" 1">
   <EMPNO>2100</EMPNO>
   <ENAME>JOHN</ENAME>
 </ROW>
 </ROWSET> .
 </DOCUMENTS
```

### XML NAMESPACES

Object relational data type definitions that are associated with a given relational database schema can be bound to a corresponding XML namespace. An XML namespace is a collection of names that are used in XML documents as element types and attribute names. An XML namespace can be defined by a URL. For example, as explained herein, assume that the relational database has a user-defined type "Address_t", which is a complex object type that comprises 3 scalar attributes, namely CITY, STATE and ZIP. For the purpose of explanation, assume that the complex object type, "Address_t", is defined in relational database schema SCOTT. Thus, "Address_t" can be bound to the XML namespace that is defined by the URL, http://ora.com/SCOTT, for example.

An XML-Schema can contain object relational types from different XML namespaces. To illustrate, assume a relational database schema FOO and a relational database schema PEE is created. Further assume that the relational database schema FOO contains the user-defined type called AddressType, and the relational database schema PEE contains the user-defined type called NameType. The AddressType comprises 3 scalar attributes, namely CITY, STATE and ZIP. The NameType comprises 2 scalar attributes, namely FIRSTNAME and LASTNAME. Assume that an object relational table, EMP2, is created. EMP2 has 2 columns, namely ENAME and EADDR. ENAME contains the name of employee, "James Bond" and is of type NameType. EADDR contains the address of James Bond and is of type AddressType.

The following SQL statements illustrate the creation of database schema FOO, database schema PEE, AddressType, NameType and EMP2 in the relational database:

```
     connect sys/sys as sysdba
     grant resource,dba to foo identified by ball;
     grant resource, dba to pee identified by wee;
     grant execute any type to foo;
     grant execute any type to pee;
     connect foo/ball
     create type AddressType as object (street varchar2(30), city varchar2(30), zip
     number(5,0));
     /
     connect pee/wee
     create type NameType as object (FirstName varchar2(30), LastName varchar2(30));
     /
     create table Emp2
     (
     ename NameType,
     eaddr foo.AddressType
     );
```

The syntax used in the preceding statements is merely illustrative. The actual syntax of SQL statements may vary from implementation to implementation. The present invention is not limited to any particular syntax.

In table EMP2, the column ENAME uses the NameType that is defined for relational database schema PEE while the column EADDR uses the Address Type that is defined for relational database schema FOO.

Thus, the XML-Schema that corresponds to the XML result set of a SQL query such as SELECT * FROM EMP2 will contain separate URLs that define the XML namespace for FOO and for PEE. The XML namespace for FOO will contain the definition for AddressType. The XML namespace for PEE will contain the definition for NameType.

The XML-Schemas that correspond to the XML result set of a SQL query such as SELECT * FROM EMP2 are as follows, according to certain of the invention:

```
     <xsd:schema xmlns:FOO="http://ns.oracle.com/xdb/FOO"
     xmlns:xsd="http://www.w3.org/2000/10/XMLSchema"
     xmlns:PEE="http://ns.oracle.com/xdb/PEE">
     <xsd:element name="ROWSET">
 <xsd:complexType>
     <xsd:element name="ROW" minOccurs="0" maxOccurs="unbounded">
      <xsd:complexType>
          <xsd:element name="ENAME" type="PEE:NAMETYPE" nullable="true"
          minOccurs""0">
          <xsd:element name="EADDR" type="FOO:ADDRESSTYPE"
          nullable="true" minoccurs="0"/>
       </xsd:complexType>
     </xsd:element>
 </xsd:complexType>
 </xsd:element>
 </xsd:schema>
     <schema targetNamespace="http://ns.oracle.com/xdb/FOO"
     xmlns="http://www3.org/2000/10/XMLSchema"
     xmlns:FOO="http://ns.oracle.com/xdb/FOO">
     <complexType name="ADDRESSTYPE">
   <element name="STREET" type="string" nullable="true" minOccurs="0"/>
   <element name="CITY" type="string" nullable="true" minOccurs="0"/>
   <element name="ZIP" type="integer" nullable="true" minoccurs="0"/>
   </complexType>
   </schema>
     <schema targetNamespace="http://ns.oracle.com/xdb/PEE"
     xmlns="http://www.w3.org/2000/10/XMLSchema"
     xmlns:PEE="http://ns.oracle.com/xdb/PEE">
     <complexType name="NAMETYPE">
   <element name="FIRSTNAME" type="string" nullable="true" minOccurs="0"/>
   <element name="LASTNAME" type="string" nullable="true" minOccurs="0"/>
   \ . </complexType>
   </schema>
```

Alternatively, XML-Schemas can be "inlined" m its corresponding XML result set that contains the target data, namely, the name and address of the employee in EMP2. According to certain examples of the invention, the XML result set shows its corresponding XML-schemas "inlined":

```
     <?xml version = '1.0'?>
     <DOCUMENT xmlns:xsd="http://www.w3.org/2000/10/XMLSchema">
     <schema targetNamespace="http://ns.oracle.com/xdb/PEE"
     xmlns="http://www.w3.org/2000/10/XMLSchema"
     xmlns:PEE="http://ns.oracle.com/xdb/PEE">
 <complexType name="NAMETYPE">
    <element name="FIRSTNAME" type="string" nullable="true" minoccurs="0"/>
    <element name="LASTNAME" type="string" nullable="true" minOccurs="0"/>
 </complexType>
 </schema>
 <schema targetNamespace="http://ns.oracle.com/xdb/FOO"
 xmlns="http://www.w3.org/2000/10/XMLSchema"
 xmlns:FOO="http://ns.oracle.com/xdb/FOO">
 <complexType name="ADDRESSTYPE">
    <element name="STREET" type="string" nullable="true" minOccurs="0"/>
    <element name="STREET" type="string" nullable="true" minOccurs="0"/>
    <element name="CITY" type="string" nullable="true" minOccurs="0"/>
    <element name="ZIP" type="integer" nullable="true" minOccurs="0"/>
 </complexType>
 </schema>
 <xsd:schema xmlns:FOO="http://ns.oracle.com/xdb/FOO"
 xmlns:xsd="http://www.w3.org/2000/10/XMLSchema"
 xmlns:PEE="http://ns.oracle.com/xdb/PEE">
 <xsd:import targetNamespace=http://ns.oracle.com/xdb/PEE"
 schemaLocation="#/DOCUMENT/xsd:schema[@targetNamespace='http://ns.oracle.coml
 xdb/PEE']"/>
 <xsd:import targetNamespace="http://ns.oracle.com/xdb/FOO"
 schemaLocation="#/DOCUMENT/xsd:schema[@targetNamespace='http://ns.oracle.com/
 xdb/FOO']"/>
 <xsd:element name="ROWSET">
   <xsd:complexType>
      <xsd:element name="ROW" minOccurs="O" maxOccurs="unbounded">
        <xsd:complexType>
            <xsd:element name="ENAME" type="PEE:NAMETYPE" nullable="true"
            minOccurs="0"/>
            <xsd:element name="EADDR" type ="FOO:ADDRESSTYPE"
            nullable="true" minOccurs="0"/>
        </xsd:complexType>
      </xsd:element>
   </xsd:complexType>
 </xsd:element>
 </xsd:schema>
 <ROWSET xmlns:xsi="http://www.w3.org/2000/10/XMLSchema-instance"
 xsi:noNamespaceSchemaLocation="#/DOCUMENT/xsd:schema[not(@targetNameespace
 )]">
 <ROW num="1">
   <ENAME>
     <FIRSTNAME>James</FIRSTNAME>
     <LASTNAME>Bond</LASTNAME>
   </ENAME>
   <EADDR>
     <STREET>00 secret ave</STREET>
     <CITY>London</CITY>
     <ZIP>39281</ZIP>
   </EADDR>
 </ROW>
 </ROWSET>
 <DOCUMBNT>
```

### UNIFORM HANDLING OF XML DATA AND SQL DATA

Typically, in a relational database, there are pre-defined relational data types. Examples of typical pre-defined relational datatypes are number, date, string, etc. Object-relational databases may also contain user-defined object types. However, in order to provide uniform handling of XML data and SQL data, a datatype called XMLType is natively defined in the relational database system. The XMLType datatype can be used for storing any type of XML data, be it structured XML data or unstructured XML data.

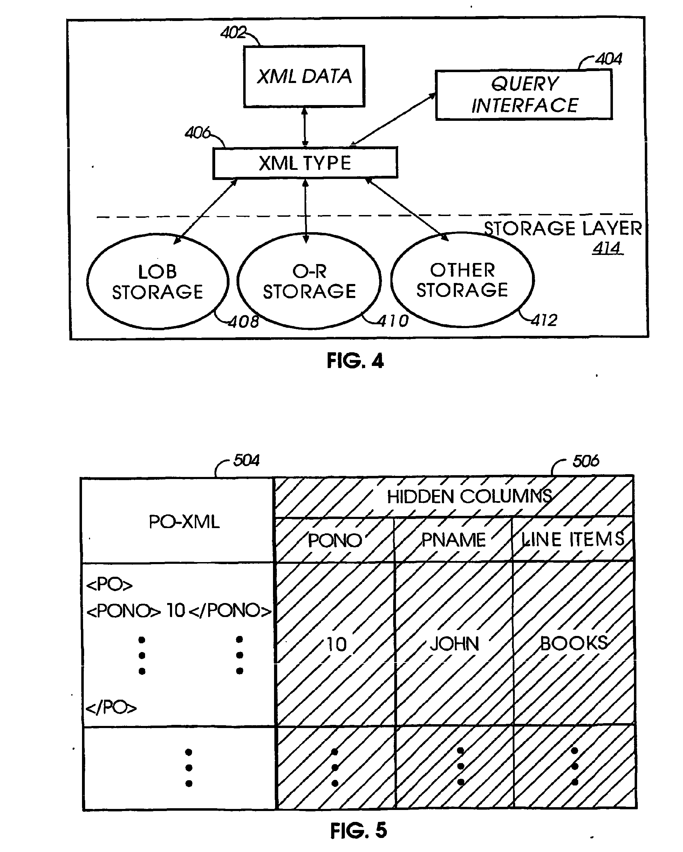

FIG. 4 is a block diagram that illustrates the XMLType storage architecture. Block 402 is XML data that is to be stored using the XMLType shown at block 406. The XMLType encapsulates the underlying storage mechanisms for XML data. Some of the storage mechanisms are shown in the storage layer 414. In storage layer 414 is shown a LOB storage mechanism 408, an object relational storage mechanism 410, and an "other" storage mechanism 412. "Other" storage mechanism 412 can be any appropriate storage mechanism for XML data. Thus, the storage mechanisms in storage layer 414 do not comprise the exhaustive set of storage mechanisms for XML data. Because the XMLType encapsulates the underlying storage mechanisms, a user of XML data only sees the XMLType while the actual details of the underlying storage mechanism of the XML data are hidden from the user. Typically, an administrator of the relational database system chooses the underlying storage mechanism for the XML data that is to be stored. The administrator chooses the type of underlying storage mechanism based on performance considerations of the storage mechanism.

To illustrate storage, some of the fields of a given XML document may contain structured data. Structured data is data that is capable of being mapped to relational columns in the relational database. In another example, assume that the XML document contains the textual content of an entire book. Rather than exploding such an XML document by mapping every element or field of the XML document to a relational column, only fields that contain data that are likely to be queried by a user are mapped to pre-defined relational types, such as a string, number, etc, while the rest of the data may be lumped together and mapped to one column for Character Large Objects (CLOBs). A user may create his or her own template to specify what fields are to be mapped to relational columns and what fields are to be mapped to CLOBs.

FIG. 5 is a block diagram that illustrates the structure of an XMLType column. Column 504 is an XMLType column that contains an XML document that comprises structured data. The fields of the structured data are mapped into hidden columns 506. For example, the PONO element of the XML document is mapped to a NUMBER column, and PNAME is mapped to a string column. In FIG. 5, the crosshatched area indicates that the columns are hidden from the user's view. The user only sees a single XMLType column.

### UNIFORM QUERY INTERFACE

According to certain embodiments of the invention, a uniform query interface is provided in order to define a core set of operations on XMLType data that is stored in the relational database. Such operations are independent of the underlying storage format. According to certain embodiments of the invention, the operations on the XMLType data is functionally abstracted as follows:
1) Extract fragments of a given XML document
2) Test for existence of certain structures in the XML document
3) Extract certain data values in the XML document
4) Transforming a given XML document. The above list of operations is not an exhaustive list of operations for XMLType data. To illustrate some of the operations, assume that an XML document called "X" contains purchase order data. The purchase order data includes a purchase order number "PONO" with value "21", purchase order name "PNAME" with value "JOHN" and a collection of lineitems and appears as follows:

```
     <PO>
       <PONO> 21 </PONO>
       <PNAME>JOHN</PNAME>
       <LINEITEM>
         <LINEITEMNO> 100 </LINEITEMNO>
         .....
           </LINEITEM>
       <! Other lineitems >
     </PO>
```

Thus, an example of the operation for extracting a fragment of XML document "X" is as follows:
EXTRACT (X, 'PO/LINEITEM')

The above operation extracts a fragment of the document X, wherein the fragment is a sub tree comprising of all the branches under LINEITEM.

An example of the operation for extracting certain data values in the XML document "X" is as follows:
EXTRACT-VALUE (X, 'PO/PNAME')

The above operation extracts the scalar value in PNAME, namely, "JOHN".

An example of the operation for testing for the existence of certain elements in the XML document "X" is as follows:
EXISTSNODE (X, 'PO/[PONO=21]')

The above operation tests whether the XML document "X" has an element called PO, which in turn has a child called PONO whose value is 21.

An example of the operation for transforming the XML document using a XSL style sheet is as follows:
TRANSFORM (X, '<xsl> ......stylesheet ..... </xsl>')

The above operations are completely agnostic as to the underlying storage format of the XML document.

### QUERY REWRITES

According to certain examples of the invention, a mechanism is provided for rewriting user queries into a form that leverages the data access and data manipulation capabilities of the underlying storage mechanism in the relational database.

The fields of structured data of a given XML document may be mapped into separate relational columns if the data in the fields is likely to be frequently queried by a user. For example, assume that one of the fields of an XML document contains an employee name, and that it is anticipated that users will frequently query the XML documents based on the employee name value. Under these conditions, employee names may be stored in a relational column called ENAME that is separate from the column that stores the XML document itself. If a XML user submits a query to access XML documents based on a particular employee's name, then the XML user's query is automatically rewritten to access only the ENAME column.

In contrast, if no query rewrite mechanism is provided and employee names are not stored in a separate column, then, when the XML user submits a query to access a XML documents based on a particular employee's name, a Document Object Model (DOM) is created for each XML document by parsing the XML document. Then the search is performed on the DOM for the employee's name by applying an appropriate XPATH expression. Creating a DOM and then performing a search on the DOM is clearly less efficient.

In another example, the existing indexing capabilities of the relational database are used to satisfy the XML user's query. If data is expected to be frequently queried, the data can be stored in a separate relational column, and a B-tree index may be built on that column. Then, if an XML user query is submitted to select, for example, a row where PONO=21, then the B-tree index on the PONO column can be used to identify the rows that contain XML documents that have the value 21 in the PONO column. Similarly, if an XML document is stored as a LOB, then a text index may be used to optimize a search on the LOB column.

A mechanism is provided in the database to generate a database query, for example a SQL query, based on the user's XML query and the mapping information associated with the storage of the XML document in the relational database.

Referring to FIG. 5, assume that the table of FIG. 5 is called PO-TABLE and that a B-tree index is generated on the relational column PONO. Assume that an XML user submits the following query:
SELECT * From PO-TABLE
Where EXISTNODE (PO-XML, '/PO[PONO=21]')

According to certain examples of the invention, the above XML user's query is converted to the following:
SELECT * From PO-TABLE
Where PO-XML .PONO=21

Thus, an index search can be performed for the predicate of PONO.

### HARDWARE

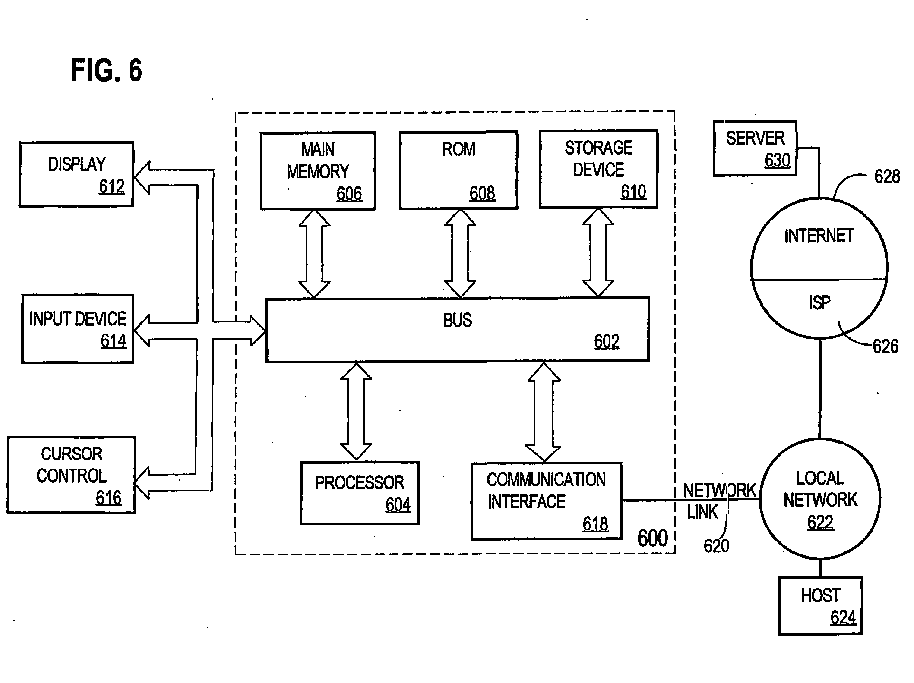

FIG. 6 is a block diagram that illustrates a computer system 600 upon which an embodiment of the invention may be implemented. Computer system 600 includes a bus 602 or other communication mechanism for communicating information, and a processor 604 coupled with bus 602 for processing information. Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a cathode ray tube (CRT), for displaying information to a computer user. An input device 614, including alphanumeric and other keys, is coupled to bus 602 for communicating information and command selections to processor 604. Another type of user input device is cursor control 616, such as a mouse, a trackball, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

The invention is related to the use of computer system 600 for implementing the techniques described herein. Those techniques are implemented by computer system 600 in response to processor 604 executing one or more sequences of one or more instructions contained in main memory 606. Such instructions may be read into main memory 606 from another computer-readable medium, such as storage device 610. Execution of the sequences of instructions contained in main memory 606 causes processor 604 to perform the process steps described herein. One or more processors in a multi-processing arrangement may also be employed to execute the sequences of instructions contained in main memory 606. Hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing.instructions to processor 604 for execution. Such a medium may take many forms, including but not limited to, non-volatile media, volatile media, and transmission media. Non-volatile media includes, for example, optical or magnetic disks, such as storage device 610. Volatile media includes dynamic memory, such as main memory 606. Transmission media includes coaxial cables, copper wire and fiber optics, including the wires that comprise bus 602. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 604 for execution. For example, the instructions may initially be carried on a magnetic disk of a remote computer. The remote computer can load the instructions into its dynamic memory and send the instructions over a telephone line using a modem. A modem local to computer system 600 can receive the data on the telephone line and use an infrared transmitter to convert the data to an infrared signal. An infrared detector coupled to bus 602 can receive the data carried in the infrared signal and place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the worldwide packet data communication network now commonly referred to as the "Internet" 628. Local network 622 and Internet 628 both use electrical, electromagnetic or optical signals that carry digital data streams. The signals through the various networks and the signals on network link 620 and through communication interface 618, which carry the digital data to and from computer system 600, are exemplary forms of carrier waves transporting the information.

Computer system 600 can send messages and receive data, including program code, through the network(s), network link 620 and communication interface 618. In the Internet example, a server 630 might transmit a requested code for an application program through Internet 628, ISP 626, local network 622 and communication interface 618. In accordance with the invention, one such downloaded application implements the techniques described herein.

The received code may be executed by processor 604 as it is received, and/or stored in storage device 610, or other non-volatile storage for later execution. In this manner, computer system 600 may obtain application code in the form of a carrier wave.

In the foregoing specification, the invention has been described with reference to specific embodiments thereof. It will, however, be evident that various modifications and changes may be made thereto without departing from the scope of the invention, as defined by the claims. The specification and drawings are, accordingly, to be regarded in an illustrative rather than a restrictive sense.

## Claims

1. A method for accessing data within a relational database, the method comprising the steps of:
receiving, at a database server, a Uniform Resource Locator (URL) request that includes an Xpath expression, wherein the Xpath expression specifies a particular relational table of the relational database and a particular column, of the particular relational table, that stores target data;
the database server determining, based at least on the Xpath expression, the particular column of the particular relational table of the relational database that corresponds to the target data; and
retrieving the target data from the particular column of the particular relational table of the relational database.

2. The method of Claim 1, further comprising the step of, prior to receiving the request, providing an XML visualization of portions of the relational database, wherein the portions that are included in the XML visualization are included in the XML visualization based on access privileges of a user who is issuing the request.

3. The method of Claim 1, further comprising providing an XML visualization of portions of the relational database in response to the request.

4. The method of Claim 1, further comprising performing operations on the target data after retrieving the target data and wherein the operations on the target data are performed by issuing an Xpath notation to traverse an XML visualization of the particular relational table of the relational database.

5. The method of Claim 4, wherein the operations on the target data comprise updating, deleting, reading, and inserting.

6. The method of Claim 2, wherein providing the XML visualization comprises dynamically generating one or more XML schema based on the access privileges that the user has at a time of generating the one or more XML schema.

7. The method of Claim 1, wherein the request is an Xpath query.

8. The method of Claim 7, wherein the Xpath query is mapped into a SQL query.

9. The method of Claim 7, wherein a translator of the Xpath query directly generates execute-time structures without being mapped into an SQL query.

10. The method of Claim 1, further comprising the step of creating a reference to one or more objects of the relational database by using uniform resource identifier reference within the relational database.

11. A computer-readable medium carrying instructions for accessing data within a relational database, the computer-readable medium comprising instructions for performing the steps of the method of one of Claims 1-10.

12. A method of providing data, the method comprising the steps of:
receiving, at a database server, a relational database query to retrieve data that resides in a relational database; and
the database server responding to the relational database query by: extracting, from one or more fields within the relational database, content for one or more XML documents;
wherein the content is stored within said one or more fields in the form of one or more data types that are natively supported by the relational database;
wherein the content is not stored within said one or more fields in the form of XML documents within the relational database;
during processing of the relational database query, generating one or more XML-schemas that describe a structure of said one or more XML documents;
constructing, within the database server, said one or more XML documents based on the content extracted from the one or more fields and said one or more XML-schemas; and
providing said one or more XML documents as a result of the relational database query in the form of one or more XML documents.

13. The method of Claim 12, wherein the relational database query specifies which values that answer the relational database query are to be contained in the one or more XML documents, and which other values that answer the relational database query are to be referenced in the one or more XML documents by reference links.

14. The method of Claim 12, wherein the step of providing said one or more XML documents as a result to the relational database query in the form of one or more XML documents comprises providing an XML document in which some values that are selected by the relational database query are contained in the XML document and other values that are selected by the relational database query are referenced in the XML document.

15. The method of Claim 12, further comprising the database server storing at least one of the one or more XML-schemas within at least one of the one or more XML documents.

16. The method of Claim 12, wherein the one or more XML-schemas further describe constraints of the one or more XML documents.

17. The method of Claim 12, wherein the one or more XML-schemas correspond to metadata that is associated with the data that is retrieved in response to the relational_ database query.

18. The method of Claim 12, wherein the one or more XML-schemas comprise relational database object types from one or more XML namespaces, wherein one or more relational database schemas are mapped to each of the one or more XML namespaces.

19. The method of Claim 12, further comprising generating the one or more XML documents, and wherein the step of generating the one or more XML documents comprises using a set of rules that is stored in the relational database to determine how to structure data contained in the one or more XML documents.

20. The method of Claim 12, wherein the relational database query selects a plurality of rows in the relational database and wherein the one or more XML documents include aggregate data, wherein the aggregate data is produced by the database server performing an aggregate function on the data from the plurality of rows.

21. The method of Claim 19, wherein the set of rules comprises rules for mapping a relational database object to a corresponding Database Uniform Resource Indicator reference.

22. The method of Claim 19, wherein the set of rules comprises rules for mapping a query language reference to a corresponding Database Uniform Resource Indicator reference.

23. The method of Claim 19, wherein the set of rules comprises rules for mapping relational data that is associated with a LOB column to a corresponding Database Uniform Resource Indicator reference.

24. The method of Claim 12, wherein the relational database query is satisfied by a plurality of rows, and the one or more XML documents include a single XML document for said plurality of rows.

25. The method of Claim 12, wherein the one or more fields within the relational database comprise two or more one or more fields within the relational database.

26. A computer-readable medium carrying one or more sequences of instructions of providing data, which instructions, when executed by one or more processors, cause the one or more processors to carry out the steps of the method of one of Claims 12-25.

27. A method for managing data in a relational database, the method comprising the steps of:
receiving at a database server an XML document for storage in the relational database;
the database server storing data from the XML document, as one or more instances of a native datatype that is natively defined by the database server, in the relational database;
wherein the native datatype encapsulates a plurality of storage mechanisms for XML data that are supported by the database server, wherein the plurality of storage mechanisms include an object relational storage mechanism and a LOB storage mechanism;
the database server receiving, through a query interface, a request for data from the XML document that is stored as the one or more instances of the native datatype, wherein the query interface defines a set of operations on XML data that are independent of the underlying storage mechanism of the XML data, and wherein the request for data specifies one or more of the set of operations; and
in response to the database server receiving the request for data from the XML document, the database server accessing the data from the XML document by converting the request into a database query and processing the database query by using the data access and data manipulation capabilities of the underlying storage mechanism of the XML document in the relational database.

28. The method of Claim 27 further comprising the steps of:
determining which corresponding columns in the relational database to use to store data from fields of the XML document; and
generating a mapping information that indicates a mapping of one or more fields in the XML document to the corresponding columns in the relational database.

29. The method of Claim 27, wherein the step of storing data includes the steps of:
storing values for a plurality of fields of the XML document into a first column of a relational table; and
storing values for at least one field of the XML document into a second column of the relational table, wherein the second column is different from said first column.

30. The method of Claim 28, wherein the request for data is an XML query.

31. The method of Claim 30, further comprising the steps of:
generating the database query based on the XML query and the mapping information; and
executing the database query to access data from the XML document.

32. The method of Claim 31, wherein the database query directly accesses the underlying relational columns and uses indexes.

33. The method of Claim 32, wherein the indexes are relational indexes.

34. The method of Claim 32, wherein the indexes are text indexes.

35. The method of Claim 27, wherein a structure of the XML document is defined by a user to contain one or more fields of structured data, and wherein structured data is data that is of a type that corresponds to an existing relational data object type in the relational database.

36. The method of Claim 27, wherein a structure of the XML document is defined by a user to contain one or more fields of unstructured data, and wherein unstructured data is data that is mapped to a LOB data type in the relational database during processing of the XML document for storage in the relational database.

37. The method of Claim 28, wherein the mapping information is defined by a user.

38. The method of Claim 37, wherein the user has an option to map more than one field of the XML document to each column of the relational database for storage.

39. The method of Claim 27, wherein the native datatype is an XMLType datatype that is defined by the database server that manages the relational database for storing the XML document.

40. The method of Claim 39, wherein the set of operations are defined for the XMLType datatype by the database server.

41. The method of Claim 40, wherein the set of operations comprises:
extracting fragments of the XML document;
testing for existence of one or more elements in the XML document;
extracting one or more values from the XML document; and
transforming the XML document.

42. The method of Claim 28, wherein:
the mapping information maps a field of said XML document to a plurality of columns of a relational table; and
the step of storing data from the XML document includes parsing said field of said XML document to identify a plurality of values and storing each of the plurality of values in a different one of said plurality of columns of the relational table.

43. The method of Claim 28, wherein:
the request specifies criteria for a field of the XML document;
the method includes determining whether the criteria is satisfied by performing the steps of:
determining, based on said mapping information, that the field is one of a plurality of fields that is mapped to a particular column;
parsing data in said particular column to locate a value of said field for said XML document; and
determining whether said value satisfies the criteria.

44. A computer-readable medium carrying one or more sequences of instructions for managing data within a relational database, which instructions, when executed by one or more processors, cause the one or more processors to carry out the steps of the method of one of Claims 27-43.

## Patentansprüche

1. Verfahren zum Zugreifen auf Daten in einer relationalen Datenbank, wobei das Verfahren die Schritte umfasst:
Empfangen, bei einem Datenbank-Server, einer URL-Anfrage (URL = *Uniform Resource Locator =* einheitlicher Ressourcenweiser), die einen Xpath-Ausdruck beinhaltet, wobei der Xpath-Ausdruck eine spezifische relationale Tabelle der relationalen Datenbank und eine spezifische Spalte der spezifischen relationalen Tabelle angibt, die Zieldaten speichert;
Bestimmen, durch den Datenbank-Server, basierend zumindest auf dem Xpath-Ausdruck, der spezifische Spalte der spezifischen relationalen Tabelle der relationalen Datenbank, die den Zieldaten entspricht; und
Auslesen der Zieldaten aus der spezifischen Spalte der spezifischen relationalen Tabelle der relationalen Datenbank.

2. Verfahren nach Anspruch 1, das weiter den Schritt umfasst, bei dem, vor einem Empfangen der Anfrage, eine XML-Darstellung von Abschnitten der relationalen Datenbank bereitgestellt wird, wobei die Abschnitte, die in der XML-Darstellung enthalten sind, in die XML-Darstellung basierend auf Zugriffsrechten eines Benutzers, der die Anfrage stellt, eingeschlossen sind.

3. Verfahren nach Anspruch 1, das weiter umfasst, dass eine XML-Darstellung von Abschnitten der relationalen Datenbank ansprechend auf die Anfrage bereitgestellt wird.

4. Verfahren nach Anspruch 1, das weiter umfasst, dass Operationen betreffend die Zieldaten nach Auslesen der Zieldaten durchgeführt werden, und wobei die Operationen betreffend die Zieldaten dadurch ausgeführt werden, dass eine Xpath-Notation ausgegeben wird, um eine XML-Darstellung der spezifischen relationalen Tabelle der relationalen Datenbank zu durchlaufen.

5. Verfahren nach Anspruch 4, wobei die Operationen betreffend die Zieldaten Aktualisieren, Löschen, Lesen und Einfügen beinhalten.

6. Verfahren nach Anspruch 2, wobei ein Bereitstellen der XML-Darstellung ein dynamisches Generieren eines oder mehrerer XML-Schemata basierend auf den Zugriffsrechten beinhaltet, die der Benutzer zu einem Zeitpunkt einer Generierung des einen oder der mehreren XML-Schemata hat.

7. Verfahren nach Anspruch 1, wobei die Anfrage eine Xpath-Abfrage ist.

8. Verfahren nach Anspruch 7, wobei die Xpath-Abfrage in eine SQL-Abfrage abgebildet wird.

9. Verfahren nach Anspruch 7, wobei ein Übersetzer der Xpath-Abfrage direkt Ausführungszeit-Strukturen erzeugt, und zwar ohne dass diese in eine SQL-Abfrage abgebildet wird.

10. Verfahren nach Anspruch 1, das weiter den Schritt umfasst, bei dem eine Referenzierung auf eines oder mehrere Objekte der relationalen Datenbank erzeugt wird, und zwar unter Verwendung einer URI-Referenzierung (URI = *Uniform Resource Identifier* = einheitlicher Ressourcenbezeichner) in der relationalen Datenbank.

11. Computerlesbares Medium, das Anweisungen zum Zugreifen auf Daten in einer relationalen Datenbank trägt, wobei das computerlesbare Medium Anweisungen zum Durchführen der Schritte des Verfahrens nach einem der Ansprüche 1 - 10 enthält.

12. Verfahren zum Bereitstellen von Daten, wobei das Verfahren die Schritte umfasst:
Empfangen, bei einem Datenbank-Server, einer Relationaldatenbank-Abfrage, um Daten auszulesen, die in einer relationalen Datenbank aufbewahrt sind; und
der Datenbank-Server auf die Relationaldatenbank-Abfrage antwortet durch: Extrahieren, aus einem oder mehreren Feldern in der relationalen Datenbank,
von Inhalt für eines oder mehrere XML-Dokumente;
wobei der Inhalt in dem einen oder den mehreren Feldern in der Form von einem oder mehreren Datentypen gespeichert ist, die durch die relationale Datenbank nativ unterstützt werden;
wobei der Inhalt nicht in dem einen oder mehreren Feldern in der Form von XML-Dokumenten in der relationalen Datenbank gespeichert ist;
während eines Verarbeitens der Relationaldatenbank-Abfrage, Erzeugen eines oder mehrerer XML-Schemata, die eine Struktur des einen oder der mehreren XML-Dokumente beschreiben;
Aufbauen, in dem Datenbank-Server, des einen oder der mehreren XML-Dokumente basierend auf dem Inhalt, der aus dem einen oder den mehreren Feldern extrahiert wird, und dem einen oder den mehreren XML-Schemata; und
Bereitstellen des einen oder der mehreren XML-Dokumente als Ergebnis der Relationaldatenbank-Abfrage in der Form von einem oder mehreren XML-Dokumenten.

13. Verfahren nach Anspruch 12, wobei die Relationaldatenbank-Abfrage angibt, welche Werte, die eine Antwort auf die Relationaldatenbank-Abfrage sind, in dem einen oder den mehreren XML-Dokumenten enthalten sein sollen, und welche weiteren Werte, die eine Antwort auf die Relationaldatenbank-Abfrage sind, in dem einen oder den mehreren XML-Dokumenten durch Referenzlinks zu referenzieren sind.

14. Verfahren nach Anspruch 12, wobei der Schritt, bei dem das eine oder die mehreren XML-Dokumente als Ergebnis der Relationaldatenbank-Abfrage in der Form von einem oder mehreren XML-Dokumenten bereitgestellt werden, beinhaltet, dass ein XML-Dokument bereitgestellt wird, in dem einige Werte, die durch die Relationaldatenbank-Abfrage gewählt werden, in dem XML-Dokument enthalten sind, und weitere Werte, die durch die Relationaldatenbank-Abfrage gewählt werden, in dem XML-Dokument referenziert sind.

15. Verfahren nach Anspruch 12, das weiter umfasst, dass der Datenbank-Server mindestens eines von dem einen oder den mehreren XML-Schemata in mindestens einem von dem einen oder den mehreren XML-Dokumenten speichert.

16. Verfahren nach Anspruch 12, wobei das eine oder die mehreren XML-Schemata weiter Randbedingungen des einen oder der mehreren XML-Dokumente beschreiben.

17. Verfahren nach Anspruch 12, wobei das eine oder die mehreren XML-Schemata Metadaten entsprechen, die den Daten zugehörig sind, welche ansprechend auf die Relationaldatenbank-Abfrage ausgelesen werden.

18. Verfahren nach Anspruch 12, wobei das eine oder die mehreren XML-Schemata Relationaldatenbank-Objekttypen aus einem oder mehreren XML-Namensräumen beinhalten, wobei einer oder mehrere Relationaldatenbank-Schemata auf einen jeweiligen des einen oder der mehreren XML-Namensräume abgebildet werden.

19. Verfahren nach Anspruch 12, das weiter ein Generieren des einen oder der mehreren XML-Dokumente umfasst, und wobei der Schritt eines Generierens des einen oder der mehreren XML-Dokumente beinhaltet, dass ein Satz von Regeln verwendet wird, der in der relationalen Datenbank gespeichert ist, um zu bestimmen, wie Daten zu strukturieren sind, die in dem einen oder den mehreren XML-Dokumenten enthalten sind.

20. Verfahren nach Anspruch 12, wobei die Relationaldatenbank-Abfrage eine Mehrzahl von Zeilen in der relationalen Datenbank auswählt, und wobei das eine oder die mehreren XML-Dokumente Aggregatdaten beinhalten, wobei die Aggregatdaten durch den Datenbank-Server dadurch erzeugt werden, dass eine Aggregatfunktion betreffend die Daten aus der Mehrzahl von Zeilen durchgeführt wird.

21. Verfahren nach Anspruch 19, wobei der Satz von Regeln Regeln zum Abbilden eines Relationaldatenbank-Objektes auf eine entsprechende Datenbank-URI-Referenzierung (URI *= Uniform Resource Indicator* = einheitlicher Ressourcenanzeiger) beinhaltet.

22. Verfahren nach Anspruch 19, wobei der Satz von Regeln Regeln zum Abbilden einer Abfragesprache-Referenz auf eine entsprechende Datenbank-URI-Referenzierung (URI = *Uniform Resource Indicator =* einheitlicher Ressourcenanzeiger) beinhaltet.

23. Verfahren nach Anspruch 19, wobei der Satz von Regeln Regeln zum Abbilden von zu einer LOB-Spalte gehörenden relationalen Daten auf eine entsprechende Datenbank-URI-Referenzierung (URI = *Uniform Resource Indicator =* einheitlicher Ressourcenanzeiger) beinhaltet.

24. Verfahren nach Anspruch 12, wobei die Relationaldatenbank-Abfrage durch eine Mehrzahl von Zeilen erfiillt wird, und das eine oder die mehreren XML-Dokumente ein einziges XML-Dokument für die Mehrzahl von Zeilen beinhalten.

25. Verfahren nach Anspruch 12, wobei das eine oder die mehreren Felder in der relationalen Datenbank zwei oder mehr Felder in der relationalen Datenbank beinhalten.

26. Computerlesbares Medium, das eine oder mehrere Sequenzen von Anweisungen zum Bereitstellen von Daten trägt, wobei die Anweisungen, wenn sie durch einen oder mehrere Prozessoren ausgeführt werden, den einen oder die mehreren Prozessoren veranlassen, die Schritte des Verfahrens nach einem der Ansprüche 12 - 25 auszuführen.

27. Verfahren zum Verwalten von Daten in einer relationalen Datenbank, wobei das Verfahren die Schritte umfasst:
Empfangen, bei einem Datenbank-Server, eines XML-Dokumentes zum Speichern in der relationalen Datenbank;
wobei der Datenbank-Server Daten von dem XML-Dokument, als eine oder mehrere Instanzen eines nativen Datentyps, der durch den Datenbank-Server nativ definiert ist, in der relationalen Datenbank speichert;
wobei der native Datentyp eine Mehrzahl von Speichermechanismen für XML-Daten kapselt, die durch den Datenbank-Server unterstützt werden, wobei die Mehrzahl von Speichermechanismen einen objektrelationalen Speichermechanismus und einen LOB-Speichermechanismus beinhalten;
wobei der Datenbank-Server über eine Abfrageschnittstelle eine Anfrage nach Daten aus dem XML-Dokument empfängt, die als die eine oder die mehreren Instanzen des nativen Datentyps gespeichert sind, wobei die Abfrageschnittstelle einen Satz von Operationen betreffend XML-Daten definiert, die unabhängig von dem zugrunde liegenden Speichermechanismus der XML-Daten sind, und wobei die Anfrage nach Daten eine oder mehrere von dem Satz von Operationen spezifiziert; und
ansprechend darauf, dass der Datenbank-Server die Anfrage nach Daten von dem XML-Dokument empfängt, der Datenbank-Server auf die Daten des XML-Dokumentes zugreift, und zwar durch Umwandeln der Anfrage in eine Datenbankabfrage und Verarbeiten der Datenbankabfrage unter Verwendung der Datenzugriffs- und Datenhandhabungsfähigkeiten des zugrunde liegenden Speichermechanismus des XML-Dokumentes in der relationalen Datenbank.

28. Verfahren nach Anspruch 27, das weiter die Schritte umfasst:
Bestimmen, welche entsprechenden Spalten in der relationalen Datenbank zu verwenden sind, um Daten von Feldern des XML-Dokumentes zu speichern; und
Generieren einer Abbildungsinformation, die ein Abbilden des einen oder der mehreren Felder in dem XML-Dokument auf die entsprechenden Spalten in der relationalen Datenbank angibt.

29. Verfahren nach Anspruch 27, wobei der Schritt eines Speicherns von Daten die Schritte beinhaltet:
Speichern von Werten für eine Mehrzahl von Feldern des XML-Dokumentes in einer ersten Spalte einer relationalen Tabelle; und
Speichern von Werten für mindestens ein Feld des XML-Dokumentes in einer zweiten Spalte der relationalen Tabelle, wobei die zweite Spalte unterschiedlich zu der ersten Spalte ist.

30. Verfahren nach Anspruch 28, wobei die Anfrage nach Daten eine XML-Abfrage ist.

31. Verfahren nach Anspruch 30, das weiter die Schritte umfasst:
Generieren der Datenbankbfrage basierend auf der XML-Abfrage und der Abbildungsinformation; und
Ausführen der Datenbankabfrage, um auf Daten von dem XML-Dokument zuzugreifen.

32. Verfahren nach Anspruch 31, wobei die Datenbankabfrage direkt auf die zugrunde liegenden relationalen Spalten zugreift und Indizes verwendet.

33. Verfahren nach Anspruch 32, wobei die Indizes relationale Indizes sind.

34. Verfahren nach Anspruch 32, wobei die Indizes Textindizes sind.

35. Verfahren nach Anspruch 27, wobei durch einen Benutzer definiert wird, dass eine Struktur des XML-Dokumentes eines oder mehrere Felder strukturierter Daten enthält, und wobei es sich bei strukturierten Daten um Daten handelt, die von einem Typ sind, der einem vorhandenen Relationaldaten-Objekttyp in der relationalen Datenbank entspricht.

36. Verfahren nach Anspruch 27, wobei durch einen Benutzer definiert wird, dass eine Struktur des XML-Dokumentes eines oder mehrere Felder nicht-strukturierter Daten enthält, und wobei es sich bei nicht-strukturierten Daten um Daten handelt, die auf einen LOB-Datentyp in der relationalen Datenbank abgebildet werden, und zwar während einer Verarbeitung des XML-Dokumentes für ein Speichern in der relationalen Datenbank.

37. Verfahren nach Anspruch 28, wobei die Abbildungsinformation durch einen Benutzer definiert wird.

38. Verfahren nach Anspruch 37, wobei der Benutzer eine Option hat, dass für ein Speichern mehr als ein Feld des XML-Dokumentes auf eine jeweilige Spalte der relationalen Datenbank abgebildet wird.

39. Verfahren nach Anspruch 27, wobei für ein Speichern der native Datentyp ein Datentyp vom XML-Typ ist, der durch den Datenbank-Server definiert ist, welcher die relationale Datenbank des XML-Dokumentes verwaltet.

40. Verfahren nach Anspruch 39, wobei der Satz von Operationen für den Datentyp vom XML-Typ durch den Datenbank-Server definiert ist.

41. Verfahren nach Anspruch 40, wobei der Satz von Operationen beinhaltet:
Extrahieren von Fragmenten des XML-Dokumentes;
Prüfen auf das Vorhandensein eines oder mehrerer Elemente in dem XML-Dokument;
Extrahieren eines oder mehrerer Werte aus dem XML-Dokument; und Transformieren des XML-Dokumentes.

42. Verfahren nach Anspruch 28, wobei:
die Abbildungsinformation ein Feld des XML-Dokumentes auf eine Mehrzahl von Spalten einer relationalen Tabelle abbildet; und
der Schritt eines Speicherns von Daten von dem XML-Dokument ein Parsen des Feldes des XML-Dokumentes, um eine Mehrzahl von Werten zu identifizieren, und ein Speichern eines jeweiligen aus der Mehrzahl von Werten in einer verschiedenen Spalte von der Mehrzahl von Spalten der relationalen Tabelle beinhaltet.

43. Verfahren nach Anspruch 28, wobei:
die Anfrage Kriterien für ein Feld des XML-Dokumentes spezifiziert;
das Verfahren beinhaltet, dass bestimmt wird, ob die Kriterien erfüllt sind, und zwar durch Durchführen der Schritte:
Bestimmen, basierend auf der Abbildungsinformation, dass es sich bei dem Feld um eines von einer Mehrzahl von Feldern handelt, das auf eine spezifische Spalte abgebildet wird;
Parsen von Daten in der spezifischen Spalte, um einen Wert des Feldes für das XML-Dokument aufzufinden; und
Bestimmen, ob der Wert die Kriterien erfüllt.

44. Computerlesbares Medium, das eine oder mehrere Sequenzen von Anweisungen zum Verwalten von Daten in einer relationalen Datenbank trägt, wobei die Anweisungen, wenn sie durch einen oder mehrere Prozessoren ausgeführt werden, den einen oder die mehreren Prozessoren veranlassen, die Schritte des Verfahrens nach einem der Ansprüche 27 - 43 auszuführen.

## Revendications

1. Un procédé d'accès à des données dans une base de données relationnelle, le procédé comprenant les opérations suivantes :
la réception, au niveau d'un serveur de base de données, d'une demande de localisateur de ressources universel (URL) qui inclut une expression Xpath, où l'expression Xpath spécifie une table relationnelle particulière de la base de données relationnelle et une colonne particulière de la table relationnelle particulière qui conserve des données cibles,
la détermination par le serveur de base de données, en fonction au moins de l'expression Xpath, de la colonne particulière de la table relationnelle particulière de la base de données relationnelle qui correspond aux données cibles, et
la récupération des données cibles à partir de la colonne particulière de la table relationnelle particulière de la base de données relationnelle.

2. Le procédé selon la Revendication 1, comprenant en outre l'opération, préalablement à la réception de la demande, de fourniture d'une visualisation XML de parties de la base de données relationnelle, où les parties qui sont incluses dans la visualisation XML sont incluses dans la visualisation XML en fonction de droits d'accès d'un utilisateur qui émet la demande.

3. Le procédé selon la Revendication 1, comprenant en outre la fourniture d'une visualisation XML de parties de la base de données relationnelle en réponse à la demande.

4. Le procédé selon la Revendication 1, comprenant en outre l'exécution d'opérations sur les données cibles après la récupération des données cibles et où les opérations sur les données cibles sont exécutées par l'émission d'une notation Xpath destinée à traverser une visualisation XML de la table relationnelle particulière de la base de données relationnelle.

5. Le procédé selon la Revendication 4, où les opérations sur les données cibles comprennent actualisation, suppression, lecture et insertion.

6. Le procédé selon la Revendication 2, où la fourniture de la visualisation XML comprend la génération dynamique d'un ou plusieurs schémas XML en fonction des droits d'accès que l'utilisateur possède au moment de la génération des un ou plusieurs schémas XML.

7. Le procédé selon la Revendication 1, où la demande est une requête Xpath.

8. Le procédé selon la Revendication 7, où la requête Xpath est mappée vers une requête SQL.

9. Le procédé selon la Revendication 7, où un convertisseur de la requête Xpath génère directement des structures temps-exécution sans être mappées vers une requête SQL.

10. Le procédé selon la Revendication 1, comprenant en outre l'opération de création d'une référence à un ou plusieurs objets de la base de données relationnelle au moyen d'une référence d'identifiant de ressource uniforme dans la base de données relationnelle.

11. Un support lisible par ordinateur contenant des instructions d'accès à des données dans une base de données relationnelle, le support lisible par ordinateur contenant des instructions permettant d'exécuter les opérations du procédé selon l'une quelconque des Revendications 1 à 10.

12. Un procédé de fourniture de données, le procédé comprenant les opérations suivantes :
la réception, au niveau d'un serveur de base de données, d'une requête de base de données relationnelle destinée à récupérer des données qui résident dans une base de données relationnelle, et
la réponse du serveur de base de données à la requête de base de données relationnelle par :
l'extraction, à partir d'un ou plusieurs champs dans la base de données relationnelle, de contenus pour un ou plusieurs documents XML,
où les contenus sont conservés en mémoire dans lesdits un ou plusieurs champs sous la forme d'un ou plusieurs types de données qui sont pris en charge de manière native par la base de données relationnelle,
où les contenus ne sont pas conservés en mémoire dans lesdits un ou plusieurs champs sous la forme de documents XML dans la base de données relationnelle,
au cours du traitement de la requête de base de données relationnelle, la génération d'un ou plusieurs schémas XML qui décrivent une structure desdits un ou plusieurs documents XML,
la construction, dans le serveur de base de données, desdits un ou plusieurs documents XML en fonction des contenus extraits des un ou plusieurs champs et desdits un ou plusieurs schémas XML, et
la fourniture desdits un ou plusieurs documents XML en tant que résultat de la requête de base de données relationnelle sous la forme d'un ou plusieurs documents XML.

13. Le procédé selon la Revendication 12, où la requête de base de données relationnelle spécifie les valeurs répondant à la requête de base de données relationnelle qui doivent être contenues dans les un ou plusieurs documents XML et les autres valeurs répondant à la requête de base de données relationnelle qui doivent être référencées dans les un ou plusieurs documents XML par des liens de référence.

14. Le procédé selon la Revendication 12, où l'opération de fourniture desdits un ou plusieurs documents XML en tant que résultat de la requête de base de données relationnelle sous la forme d'un ou plusieurs documents XML comprend la fourniture d'un document XML dans lequel certaines valeurs qui sont sélectionnées par la requête de base de données relationnelle sont contenues dans le document XML et d'autres qui sont sélectionnées par la requête de base de données relationnelle sont référencées dans le document XML.

15. Le procédé selon la Revendication 12, comprenant en outre la conservation par le serveur de base de données d'au moins un des un ou plusieurs schémas XML dans au moins un des un ou plusieurs documents XML.

16. Le procédé selon la Revendication 12, où les un ou plusieurs schémas XML décrivent en outre des contraintes des un ou plusieurs documents XML.

17. Le procédé selon la Revendication 12, où les un ou plusieurs schémas XML correspondent à des métadonnées qui sont associées aux données qui sont récupérées en réponse à la requête de base de données relationnelle.

18. Le procédé selon la Revendication 12, où les un ou plusieurs schémas XML comprennent des types d'objet de base de données relationnelle provenant d'un ou plusieurs espaces de nommage XML, où un ou plusieurs schémas de base de données relationnelle sont mappés avec chacun des un ou plusieurs espaces de nommage XML.

19. Le procédé selon la Revendication 12, comprenant en outre la génération des un ou plusieurs documents XML, et où l'opération de génération des un ou plusieurs documents XML comprend l'utilisation d'un ensemble de règles qui sont conservées en mémoire dans les un ou plusieurs documents XML.

20. Le procédé selon la Revendication 12, où la requête de base de données relationnelle sélectionne une pluralité de lignes dans la base de données relationnelle et où les un ou plusieurs documents XML incluent des données agrégées, où les données agrégées sont produites par le serveur de base de données exécutant une fonction d'agrégation sur les données provenant de la pluralité de lignes.

21. Le procédé selon la Revendication 19, où l'ensemble de règles comprend des règles destinées à mapper un objet de base de données relationnelle avec une référence d'indicateur de ressource uniforme de base de données correspondante.

22. Le procédé selon la Revendication 19, où l'ensemble de règles comprend des règles destinées à mapper une référence de langage de requête avec une référence d'indicateur de ressource uniforme de base de données correspondante.

23. Le procédé selon la Revendication 19, où l'ensemble de règles comprend des règles destinées à mapper des données relationnelles qui sont associées à une colonne LOB avec une référence d'indicateur de ressource uniforme de base de données correspondante.

24. Le procédé selon la Revendication 12, où la requête de base de données relationnelle est satisfaite par une pluralité de lignes, et les un ou plusieurs documents XML incluent un document XML unique pour ladite pluralité de lignes.

25. Le procédé selon la Revendication 12, où les un ou plusieurs champs dans la base de données relationnelle comprennent deux ou plus champs dans la base de données relationnelle.

26. Un support lisible par ordinateur contenant une ou plusieurs séquences d'instructions de fourniture de données, lesquelles instructions, lorsqu'elles sont exécutées par un ou plusieurs processeurs, amènent les un ou plusieurs processeurs à exécuter les opérations du procédé selon l'une quelconque des Revendications 12 à 25.

27. Un procédé de gestion de données dans une base de données relationnelle, le procédé comprenant les opérations suivantes :
la réception, au niveau d'un serveur de base de données, d'un document XML pour conservation dans la base de données relationnelle,
la conservation, par le serveur de base de données, de données provenant du document XML sous la forme d'une ou plusieurs instances d'un type de données natif qui est défini de manière native par le serveur de base de données dans la base de données relationnelle,
où le type de données natif encapsule une pluralité de mécanismes de conservation pour des données XML qui sont pris en charge par le serveur de base de données, où la pluralité de mécanismes de conservation inclue un mécanisme de conservation relationnel d'objets et un mécanisme de conservation LOB,
la réception par le serveur de base de données, par l'intermédiaire d'une interface de requête, d'une demande de données à partir du document XML qui est conservé en mémoire sous la forme des une ou plusieurs instances du type de données natif, où l'interface de requête définit un ensemble d'opérations sur des données XML qui sont indépendantes du mécanisme de conservation sous-jacent des données XML, et où la demande de données spécifie une ou plusieurs opérations de l'ensemble d'opérations, et
en réponse à la réception par le serveur de base de données de la demande de données à partir du document XML, l'accès par le serveur de base de données aux données provenant du document XML par la conversion de la demande en une requête de base de données et le traitement de la requête de base de données au moyen des capacités d'accès aux données et de manipulation de données du mécanisme de conservation sous-jacent du document XML dans la base de données relationnelle.

28. Le procédé selon la Revendication 27 comprenant en outre les opérations suivantes :
la détermination des colonnes correspondantes dans la base de données relationnelle à utiliser pour conserver des données provenant de champs du document XML, et
la génération d'une information de mappage qui indique un mappage d'un ou plusieurs champs dans le document XML avec les colonnes correspondantes dans la base de données relationnelle.

29. Le procédé selon la Revendication 27, où l'opération de conservation de données comprend les opérations suivantes :
la conservation de valeurs pour une pluralité de champs du document XML dans une première colonne d'une table relationnelle, et
la conservation de valeurs pour au moins un champ du document XML dans une deuxième colonne de la table relationnelle, où la deuxième colonne est différente de ladite première colonne.

30. Le procédé selon la Revendication 28, où la demande de données est une requête XML.

31. Le procédé selon la Revendication 30, comprenant en outre les opérations suivantes :
la génération d'une requête de base de données en fonction de la requête XML et de l'information de mappage, et
l'exécution de la requête de base de données de façon à accéder à des données provenant du document XML.

32. Le procédé selon la Revendication 31, où la requête de base de données accède directement aux colonnes relationnelles sous-jacentes et utilise des index.

33. Le procédé selon la Revendication 32, où les index sont des index relationnels.

34. Le procédé selon la Revendication 32, où les index sont des index textuels.

35. Le procédé selon la Revendication 27, où une structure du document XML est définie par un utilisateur de façon à contenir un ou plusieurs champs de données structurées, et où les données structurées sont des données qui sont d'un type qui correspond à un type d'objet de données relationnel existant dans la base de données relationnelle.

36. Le procédé selon la Revendication 27, où une structure du document XML est définie par un utilisateur de façon à contenir un ou plusieurs champs de données non structurées, et où les données non structurées sont des données qui sont mappées avec un type de données LOB dans la base de données relationnelle au cours du traitement du document XML pour conservation dans la base de données relationnelle.

37. Le procédé selon la Revendication 28, où l'information de mappage est définie par un utilisateur.

38. Le procédé selon la Revendication 37, où l'utilisateur a la possibilité de mapper plus d'un champ du document XML avec chaque colonne de la base de données relationnelle pour conservation.

39. Le procédé selon la Revendication 27, où le type de données natif est un type de données XMLType qui est défini par le serveur de base de données qui gère la base de données relationnelle pour la conservation du document XML.

40. Le procédé selon la Revendication 39, où l'ensemble d'opérations est défini pour le type de données XMLType par le serveur de base de données.

41. Le procédé selon la Revendication 40, où l'ensemble d'opérations comprend : l'extraction de fragments du document XML,
une opération test à des fins de recherche d'existence d'un ou plusieurs éléments dans le document XML,
l'extraction d'une ou plusieurs valeurs du document XML, et
la transformation du document XML.

42. Le procédé selon la Revendication 28, où:
l'information de mappage mappe un champ dudit document XML avec une pluralité de colonnes d'une table relationnelle, et
l'opération de conservation de données provenant du document XML comprend l'analyse dudit champ dudit document XML de façon à identifier une pluralité de valeurs et la conservation de chaque valeur la pluralité de valeurs dans une colonne différente de ladite pluralité de colonnes de la table relationnelle.

43. Le procédé selon la Revendication 28, où:
la requête spécifie des critères pour un champ du document XML,
le procédé comprend la détermination si les critères sont satisfaits par l'exécution des opérations suivantes :
la détermination, en fonction de ladite information de mappage, que le champ est un champ d'une pluralité de champs qui est mappé avec une colonne particulière,
l'analyse de données dans ladite colonne particulière de façon à localiser une valeur dudit champ pour ledit document XML, et
la détermination si ladite valeur satisfait les critères.

44. Un support lisible par ordinateur contenant une ou plusieurs séquences d'instructions destinées à la gestion de données dans une base de données relationnelle, lesquelles instructions, lorsqu'elles sont exécutées par un ou plusieurs processeurs, amènent les un ou plusieurs processeurs à exécuter les opérations du procédé selon l'une quelconque des Revendications 27 à 43.
